# FASCICULE DE BREVET EUROPEEN

(11) **EP 4 090 512 B1**
(45) Date de publication et mention de la délivrance du brevet: **30.04.2025**
(21) Numéro de dépôt: 20848700.9
(22) Date de dépôt: 16.12.2020
(51) Int. Cl.: B29C 48/49, B29C 48/21, B29C 48/25, B29C 48/30, B29C 48/265, B29D 30/52

(54) **INSTALLATION D'EXTRUSION AVEC SYSTÈME DE VERROUILLAGE À VERROUS AUTOTRACTÉS**
EXTRUSIONSANLAGE MIT EINEM SCHLIESSSYSTEM MIT SELBSTANGETRIEBENEN SCHLÖSSERN
EXTRUSION INSTALLATION HAVING A LOCKING SYSTEM WITH SELF-PROPELLED LOCKS

(30) Priorité: 24.12.2019 FR 1915560
(43) Date de publication de la demande: 23.11.2022
(73) Titulaire: COMPAGNIE GENERALE DES ETABLISSEMENTS MICHELIN, 63000 Clermont-Ferrand (FR)
(72) Inventeur: MIOCHE, Gilles, 63040 Clermont-Ferrand Cedex 9 (FR); TORRES-CASTELLANO, Miguel, 63040 Clermont-Ferrand Cedex 9 (FR)
(74) Mandataire: M.F.P. Michelin
(86) Numéro de dépôt international: PCT/FR2020/052477
(87) Numéro de publication internationale: WO 2021/130437

(56) Documents cités:
- EP-A1- 0 407 756
- EP-A1- 2 883 679
- CN-B- 104 149 302
- DE-A1- 102011 084 110

## Description

La présente invention concerne le domaine des installations d'extrusion, et en particulier des installations de coextrusion permettant de réaliser des profilés dits « complexes » en extrudant simultanément à travers une même filière plusieurs matériaux extrudés, tels que des mélanges élastomériques.

De tels profilés peuvent notamment être destinés à entrer dans la constitution de bandages pneumatiques, et peuvent par exemple constituer des bandes de roulement.

Comme décrit dans DE 10 2011 084110 A1 et EP 0 407 756 A1, les installations de coextrusion connues comprennent usuellement au moins une tête, sur laquelle sont montées plusieurs extrudeuses délivrant chacune un matériau extrudé. La tête comporte des voies qui acheminent lesdits matériaux extrudés en provenance desdites extrudeuses jusqu'à un bloc d'outillage, qui est fixé à ladite tête et qui est pourvu d'une filière qui confère à la section du profilé sa forme définitive.

La fixation du bloc d'outillage sur la tête requiert généralement un système de verrouillage relativement lourd et encombrant, dans la mesure où ledit système de verrouillage doit garantir notamment l'étanchéité et la rigidité de l'installation à l'encontre de pressions de travail qui peuvent être particulièrement élevées.

Or, le poids et l'encombrement du système de verrouillage ont bien entendu une influence sur l'emprise au sol de l'installation, mais également sur la durée, la complexité et le coût des opérations de maintenance, lorsqu'il est nécessaire de nettoyer périodiquement le bloc d'outillage, ou encore de remplacer ledit bloc d'outillage pour changer la nature du profilé produit.

Les objets assignés à l'invention visent par conséquent à proposer une installation d'extrusion qui présente un système de verrouillage qui soit relativement simple, compact et léger, mais néanmoins robuste et fiable, et qui permette notamment d'effectuer des changements rapides du bloc d'outillage, en limitant l'amplitude des déplacements des organes de verrouillage ainsi que les dépenses d'énergie correspondantes.

Les objets assignés à l'invention sont atteints au moyen d'une installation d'extrusion comprenant au moins une première tête qui est agencée pour recevoir une première extrudeuse destinée à délivrer un premier matériau extrudé, ladite première tête comprenant au moins une première voie qui permet d'acheminer ledit premier matériau extrudé jusqu'à un bloc d'outillage qui comprend une filière agencée pour conformer ledit au moins premier matériau extrudé en un profilé, ladite installation pouvant adopter alternativement une configuration de fermeture, dans laquelle la première tête est maintenue fixée contre ledit bloc d'outillage par un premier verrou qui exerce à cet effet un effort de serrage qui presse ladite première tête contre le bloc d'outillage selon une première direction dite « direction d'accouplement », de manière à ce que le bloc d'outillage puisse recevoir le premier matériau extrudé en provenance de la première extrudeuse, et une configuration d'ouverture, dans laquelle ladite première tête est séparée dudit bloc d'outillage, l'installation étant caractérisée en ce que le premier verrou comprend un premier mors qui est monté mobile selon une seconde direction, dite « direction de verrouillage », transverse à la direction d'accouplement, ainsi qu'au moins un moteur de verrouillage qui est embarqué sur ledit premier mors et couplé à un tirant qui est agencé de manière à assurer une prise contre un point d'ancrage prévu à cet effet dans la première tête, de sorte que le moteur de verrouillage puisse agir en traction sur le tirant, à l'encontre du point d'ancrage, afin de se rapprocher, avec ledit mors, dudit point d'ancrage, selon la direction de verrouillage, de manière à ce que ledit mors génère l'effort de serrage qui presse la première tête contre le bloc d'outillage.

Avantageusement, la mise en œuvre d'un verrou autotracté conformément à l'invention permet de réaliser une chaîne de verrouillage courte, impliquant des organes mécaniques peu nombreux, de dimensions modestes.

En particulier, le tirant permettra de préférence au moteur de verrouillage d'agir en prise directe sur le point d'ancrage, et ainsi d'assurer une liaison directe, de préférence rectiligne, entre le point d'ancrage et le mors, sans mécanisme de renvoi de mouvement, et en particulier sans articulation pivotante de type embiellage.

On peut ainsi placer l'actionneur, c'est-à-dire ici le moteur de verrouillage, au plus près de l'effecteur, ici le mors, et de la zone à serrer, ici le plan de joint selon lequel la première tête s'appuie contre le bloc d'outillage, selon un agencement particulièrement simple, léger et compact.

Un tel agencement compact nécessite avantageusement peu d'amplitude de mouvement du premier verrou pour alternativement verrouiller le bloc d'outillage contre la tête ou au contraire libérer ledit bloc d'outillage afin d'autoriser la séparation dudit bloc d'outillage de la tête, et permet donc de gagner en précision et en vitesse d'exécution lors du passage de la configuration d'ouverture à la configuration de fermeture et inversement.

En outre, une telle architecture permet, comme on le verra par la suite, de multiplier les moteurs de verrouillage embarqués sur le mors, et donc de multiplier les tirants correspondants, et donc les points d'ancrage. On peut ainsi obtenir une bonne répartition, relativement homogène, de l'effort de serrage le long du plan de joint. En outre, cette multiplication des moteurs de verrouillage permet d'obtenir un effort de serrage élevé, même si l'on utilise des moteurs de verrouillage de puissance modeste et donc légers et de petites dimensions.

Le bloc d'outillage sera ainsi verrouillé contre la tête de manière solide et parfaitement étanche, même si le premier verrou reste particulièrement compact.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
La figure 1 illustre, selon une vue d'ensemble en perspective, une installation selon l'invention, ici en configuration d'ouverture, ladite installation comprenant une première tête, ainsi qu'une seconde tête, qui sont agencées pour venir se refermer et se verrouiller sur un même bloc d'outillage, de part et d'autre de ce dernier, l'installation utilisant à cet effet un premier verrou autotracté ainsi qu'un second verrou autotracté qui est disposé sensiblement symétriquement au premier verrou autotracté par rapport au bloc d'outillage.
Les figures 2, 3 et 4 illustrent, selon des vues respectivement en perspective, de côté et en coupe du dessus, une partie de l'installation de la figure 1 en configuration d'ouverture.
Les figures 5, 6 et 7 illustrent, selon des vues respectivement en perspective, de côté et en coupe du dessus, une partie de l'installation de la figure 1 dans une configuration intermédiaire entre la configuration d'ouverture et la configuration de fermeture, qui correspond à une étape au cours de laquelle la première tête, de même que la seconde tête, sont rapprochées du bloc d'outillage selon la direction d'accouplement de sorte à permettre aux tirants, ici portés par les premier et second verrous, d'engager les points d'ancrage correspondants prévus dans lesdites première et seconde tête.
Les figures 8, 9 et 10 illustrent, selon des vues respectivement en perspective, de côté et en coupe du dessus, une partie de l'installation de la figure 1 en configuration de fermeture.
Les figures 11 et 12 sont des vues de détail en perspective, respectivement de face et de dos, du premier verrou de l'installation de la figure 1.
Les figures 13 et 14 sont des vues de détail en perspective, respectivement de face et de dos, de la première tête de l'installation de la figure 1.
Les figures 15 et 16 représentent, selon des vues en perspective respectivement éclatée et assemblée, un exemple de dispositif de guidage de verrou utilisé pour guider le premier verrou au sein de l'installation de la figure 1.
La figure 17 est une vue de détail agrandie d'une portion de la figure 10, montrant l'interaction du premier verrou avec la première tête et la seconde tête en configuration de fermeture.

La présente invention concerne une installation 1 d'extrusion.

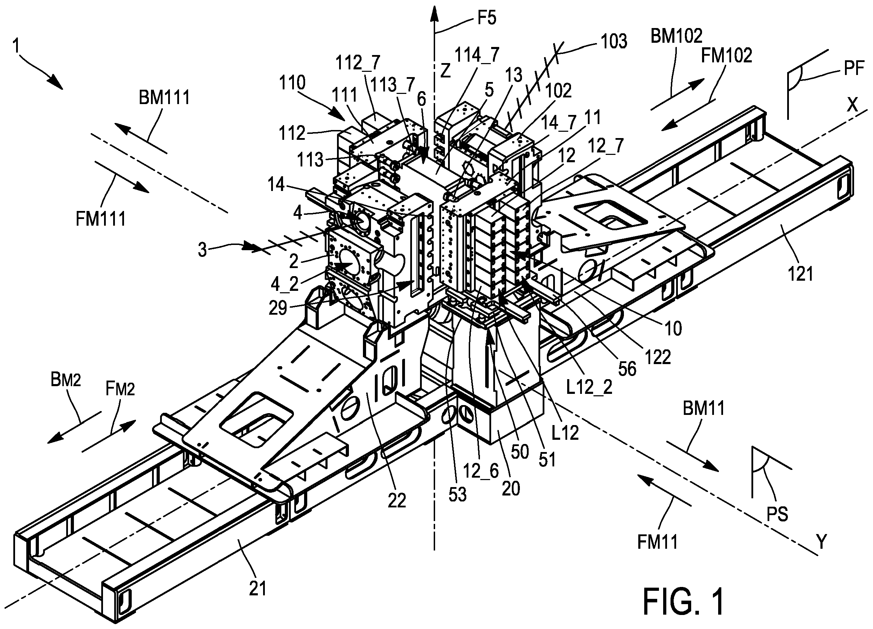

Ladite installation 1 d'extrusion comprend, tel que cela est visible sur la figure 1, au moins une première tête 2 qui est agencée pour recevoir une première extrudeuse 3 destinée à délivrer un premier matériau extrudé.

La première tête 2 comprend au moins une première voie 4 qui permet d'acheminer ledit premier matériau extrudé ainsi délivré par l'extrudeuse 3 jusqu'à un bloc d'outillage 5.

Ledit bloc d'outillage 5 comprend une filière 6 qui est agencée pour conformer ledit au moins premier matériau extrudé en un profilé.

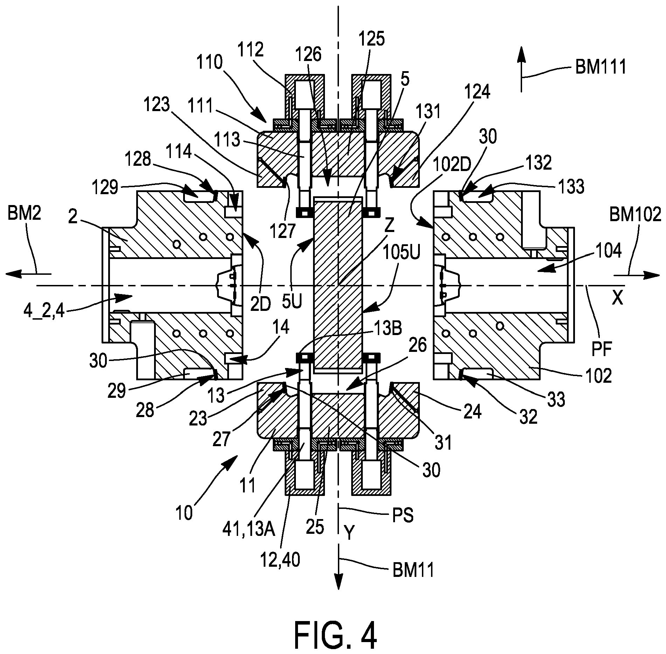

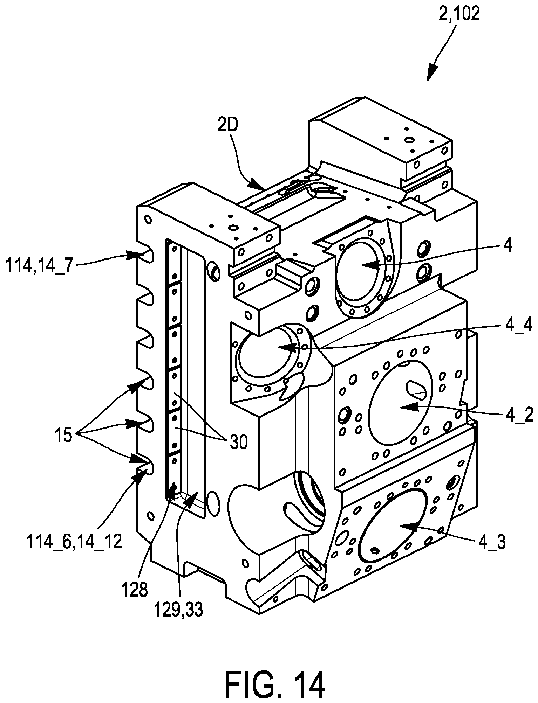

De préférence, tel que cela est bien visible sur les figures 1, 13 et 14, la première tête 2 comportera une pluralité de voies 4, 4_2, 4_3, 4_4, par exemple trois ou quatre voies, conçues pour accueillir chacune une extrudeuse distincte, délivrant chacune un matériau extrudé, typiquement pour pouvoir co-extruder une pluralité de matériaux distincts en un même profilé. Lesdites voies 4, 4_2, 4_3, 4_4 pourront de préférence être séparées de sorte à acheminer séparément les différents matériaux extrudés jusqu'au bloc d'outillage 5. Par simple commodité de description, on pourra toutefois assimiler de manière générique les différentes voies les unes aux autres, et les désigner alors par une même référence numérique générique 4, tel que cela est par exemple le cas dans certaines vues en coupe de dessus des figures 4, 7 et 10.

De préférence, le premier matériau extrudé, et de préférence plusieurs voire la totalité des matériaux extrudés, seront des mélanges élastomériques, à base de caoutchouc, et plus particulièrement à base de caoutchouc cru, c'est-à-dire non vulcanisé.

De façon connue en soi, l'une et/ou l'autre des extrudeuses 3 pourra être formée par une extrudeuse à vis, comprenant un fourreau qui vient se brider de manière étanche sur la tête 4, afin de déboucher dans la voie 4, 4_2, 4_3, 4_4 correspondante, et au sein duquel une vis sans fin, disposée selon la direction longitudinale dudit fourreau, est animée d'un mouvement de rotation autour de son axe longitudinal.

Le bloc d'outillage 5 permettra de configurer et d'assembler entre eux lesdits matériaux extrudés afin de les réunir en un même profilé complexe. La filière 6 confère à la section droite du profilé, c'est-à-dire à la section du profilé qui est normale à la direction d'écoulement longitudinale selon laquelle est généré ledit profilé, le contour extérieur définitif de ladite section.

La filière 6 pourra être une filière plate, formée par une lame fixe, ou un assemblage de lames fixes qui délimitent la section du profilé, ou bien encore par une filière à rouleau, au sein de laquelle l'extrémité aval du bloc d'outillage 5, dans le sens d'écoulement du ou des matériaux extrudés, forme une pré-filière qui est placée en vis-à-vis d'un rouleau mis en rotation, de sorte à définir, entre la surface dudit rouleau et la surface de sortie de ladite pré-filière, de forme conjuguée au rouleau, un entrefer qui définit l'épaisseur du profilé.

Le profilé obtenu pourra de préférence former un élément constitutif d'un bandage, et plus particulièrement d'un bandage pneumatique.

Selon une application préférentielle, l'installation 1 selon l'invention sera utilisée pour produire un profilé destiné à former une bande de roulement.

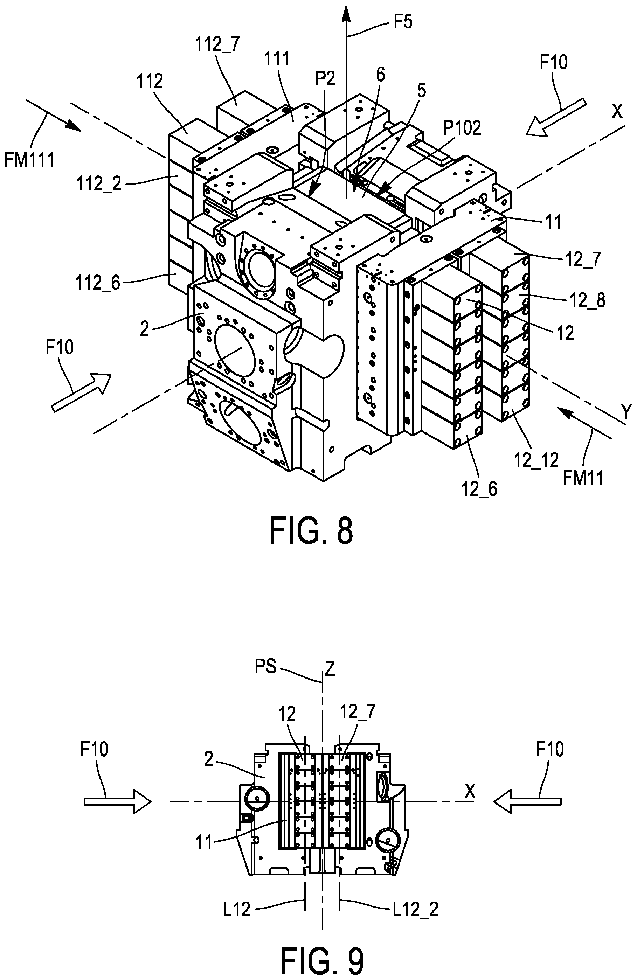

L'installation 1 peut adopter alternativement d'une part une configuration de fermeture, illustrée notamment sur les figures 8, 9, 10 et 17, dans laquelle la première tête 2 est maintenue fixée contre ledit bloc d'outillage 5 par un premier verrou 10 qui exerce à cet effet un effort de serrage F10 qui presse ladite première tête 2 contre le bloc d'outillage 5 selon une première direction X dite « direction d'accouplement » X, de manière à ce que le bloc d'outillage 5 puisse recevoir, via la première tête 2, le premier matériau extrudé en provenance de la première extrudeuse 3, et plus globalement de manière à ce que le bloc d'outillage 5 puisse recevoir les différents matériaux extrudés en provenance des différentes extrudeuses connectées à la première tête 2, et d'autre part une configuration d'ouverture, illustrée notamment sur les figues 1, 2, 3 et 4, dans laquelle ladite première tête 2 est séparée dudit bloc d'outillage 5.

La configuration de fermeture correspond à une configuration de travail, dans laquelle les extrudeuses 3 peuvent débiter à travers la première tête 2, et à travers le bloc d'outillage 5 auquel ladite première tête 2 est raccordée de façon étanche, sous l'effort de serrage F10 exercé par le premier verrou 10, pour produire le profilé.

En configuration de fermeture, la surface aval 2D de la première tête 2 est plaquée contre une surface de jonction amont 5U du bloc d'outillage 5 selon un premier plan de joint P2. Ledit premier plan de joint P2 s'étend de préférence selon une surface plane. Ledit premier plan de joint P2 est de préférence normal à la direction d'accouplement X, et ici préférentiellement vertical.

La configuration d'ouverture permet un accès à l'intérieur de l'installation 1, et peut être utilisée pour des opérations de maintenance telle que le remplacement du bloc d'outillage 5 ou le nettoyage de la première tête 2.

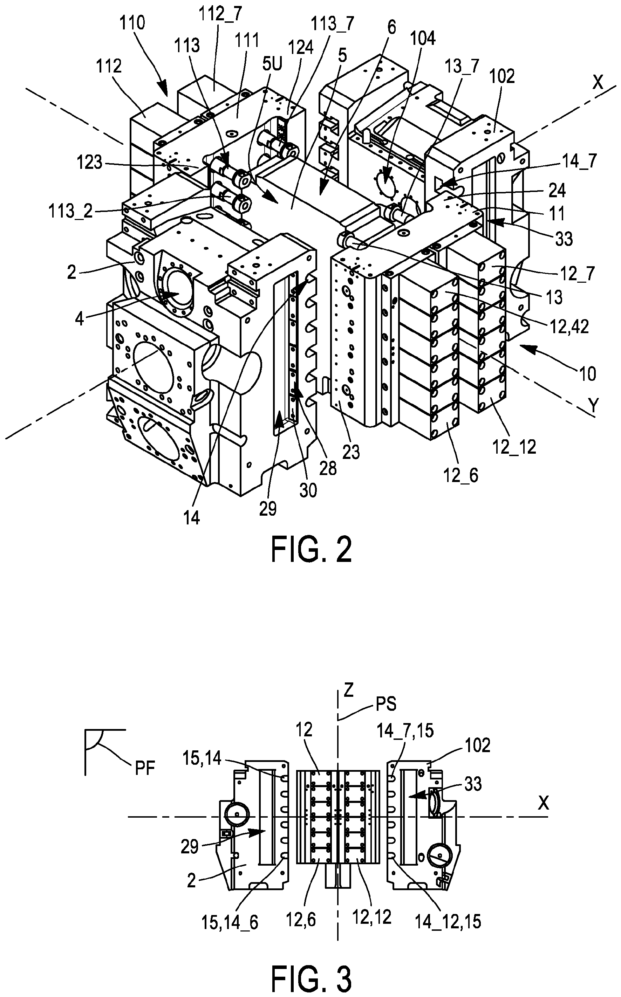

Selon l'invention, le premier verrou 10 comprend, tel que cela est notamment bien visible sur les figures 2, 4, 10, 11, 12 et 17, un premier mors 11 qui est monté mobile selon une seconde direction Y, dite « direction de verrouillage » Y, qui est transverse à la direction d'accouplement X, ainsi qu'au moins un moteur de verrouillage 12 qui est embarqué sur ledit premier mors 11 et couplé à un tirant 13 qui est agencé de manière à assurer une prise contre un point d'ancrage 14 prévu à cet effet dans la première tête 2, de sorte que le moteur de verrouillage 12 puisse agir en traction sur le tirant 13, à l'encontre du point d'ancrage 14, afin de se rapprocher, avec ledit premier mors 11, dudit point d'ancrage 14, selon la direction de verrouillage Y, de manière à ce que ledit premier mors 11 génère l'effort de serrage F10 qui presse la première tête 2 contre le bloc d'outillage 5.

Ainsi, le premier mors 11, et plus globalement le premier verrou 10 comprenant ledit premier mors 11 et le moteur de verrouillage 12, est autotracté, en ceci qu'il se sert de la première tête 2 comme appui pour se tracter vers ladite tête 2 au moyen du tirant 13, et plus globalement pour entraîner solidairement vers la tête 2, et plus précisément vers le point d'ancrage 14, le sous-ensemble mobile que forme ledit premier mors 11 et le moteur de verrouillage 12.

Le premier mors 11, et plus globalement le premier verrou 10, est, plus particulièrement, mobile selon la direction de verrouillage Y entre :
- d'une part une position d'engagement, dans laquelle le premier mors 11 engage la première tête 2, et le moteur de verrouillage 12 exerce une traction suffisante sur le tirant 13, de sorte que ledit premier mors 11 serre la première tête 2 contre le bloc d'outillage 5, en exerçant l'effort de serrage F10 qui force le rapprochement mutuel de la première tête 2 et du bloc d'outillage 5, et qui plaque ladite première tête 2 de manière étanche contre ledit bloc d'outillage 5 selon le premier plan de joint P2, ici en assurant un contact direct par aboutement de la surface aval 2D de la première tête 2 contre la surface de jonction amont 5U correspondante du bloc d'outillage 5, et donc qui permet de maintenir l'installation 1 en configuration de fermeture,
- et d'autre part une position de dégagement, dite aussi « position de retrait », dans laquelle le premier mors 11 est placé en retrait de la première tête 12, à une distance plus éloignée du point d'ancrage 14 que lorsque ledit premier mors 11 se trouve en position d'engagement, de manière à relâcher l'effort de serrage F10 et à libérer la première tête 2 pour que ladite première tête 2 puisse se séparer du bloc d'outillage 5, ici en s'éloignant du plan de joint P2 et donc du bloc d'outillage 5 selon la direction d'accouplement X, et plus globalement pour permettre à l'installation 1 de passer en configuration d'ouverture.

On notera que, de préférence, la première tête 2 est agencée de telle sorte que, lorsque le premier mors 11 se trouve en position de dégagement, la première tête 2, et plus particulièrement le point d'ancrage 14, peut se dégager du tirant 13, tel que cela est notamment visible sur les figures 2 et 4.

A cet effet, le point d'ancrage 14 pourra être formé par un logement 15 qui s'ouvre sur la surface aval 2D de la première tête 2, et qui se trouve donc dégagé en retrait du tirant 13 lorsque la première tête 2 se sépare du bloc d'outillage 5 selon le premier plan de joint P2 et s'éloigne dudit bloc d'outillage 5 en reculant selon la direction d'accouplement X.

Tel que cela est visible sur la figure 1, l'installation comprend un bâti 20, par rapport auquel la première tête 2 peut effectuer des déplacements selon une direction parallèle à, et de préférence confondue avec, la direction d'accouplement X, de sorte à pouvoir sélectivement s'approcher et venir au contact du bloc d'outillage 5, selon un mouvement d'avance FM2, ou au contraire se séparer et s'éloigner dudit bloc d'outillage 5, selon un mouvement de recul BM2.

Lesdits déplacements de la première tête 2 selon la direction d'accouplement X s'effectueront de préférence en translation rectiligne, par exemple en suivant un rail de guidage 21 qui guide un chariot 22 portant ladite première tête 2.

De préférence, la direction d'accouplement X est horizontale.

Un tel agencement permet de conférer un agencement compact et stable à l'installation 1, et permet notamment d'accoupler deux têtes 2, 102 au bloc d'outillage 5, de part et d'autre dudit bloc d'outillage 5, par deux faces de jonction 5U, 105U opposées dudit bloc d'outillage 5.

De même, la direction de verrouillage Y, selon laquelle s'opèrent les mouvements du premier verrou 10 par rapport au bâti 20, sera de préférence horizontale.

Ladite direction de verrouillage Y sera, de façon particulièrement préférentielle, perpendiculaire à la direction d'accouplement X.

Ici encore, ceci favorisera un agencement compact de l'installation, et une action de fermeture robuste et stable du premier verrou 10 sur la tête, ou les têtes 2, 102.

Le premier verrou 10 se déplacera de préférence en translation rectiligne selon la direction de verrouillage Y, par exemple au moyen d'une platine 56, tel que cela sera détaillé plus bas.

On notera Z la direction, dite « direction d'étagement », ici de préférence verticale, qui forme avec la direction d'accouplement et la direction de verrouillage Y un trièdre, plus préférentiellement un trièdre rectangle dont les trois axes X, Y, Z sont deux à deux perpendiculaires.

Avantageusement, le système de verrou 10 autotracté proposé par l'invention permet de réaliser une chaîne cinématique de verrouillage qui est particulièrement courte, robuste et efficace, puisque le tirant 13 établit et matérialise un lien direct, et de préférence géométriquement rectiligne et donc correspondant à la plus courte distance possible, entre d'une part le premier mors 11, via le moteur de verrouillage 12 qui est fixé sur ledit premier mors 11, et d'autre part la première tête 2, via le point d'ancrage 14 dans lequel le tirant 13 vient en prise.

Plus particulièrement, le premier mors 11 sera de préférence l'unique organe de rattachement du moteur de verrouillage 12 au bâti 20, assurant le support du moteur de verrouillage 12, c'est-à-dire que la seule chaîne cinématique reliant le moteur de verrouillage 12 au bâti 20, sans passer par le tirant 13, passe nécessairement par le premier mors 11.

On notera du reste que le tirant 13 est de préférence lui-même porté par le moteur de verrouillage 12, et donc par le premier mors 11, mais que ledit tirant 13 ne contribue pas, en revanche, à porter le moteur de verrouillage 12 sur le bâti 20, de sorte que la seule chaîne cinématique qui à la fois i) relie le moteur de verrouillage 12 au bâti 20 et ii) est capable de porter, seule, le moteur de verrouillage 12 passe nécessairement par le premier mors 11.

Avantageusement, une telle absence d'organe tiers qui serait interposé entre le bâti 20 et le moteur de verrouillage 12, en parallèle du premier mors 11, pour supporter le moteur de verrouillage 12, permet de conférer au premier verrou 10, et plus globalement à l'installation 1, une grande simplicité, une bonne compacité, et une relative légèreté.

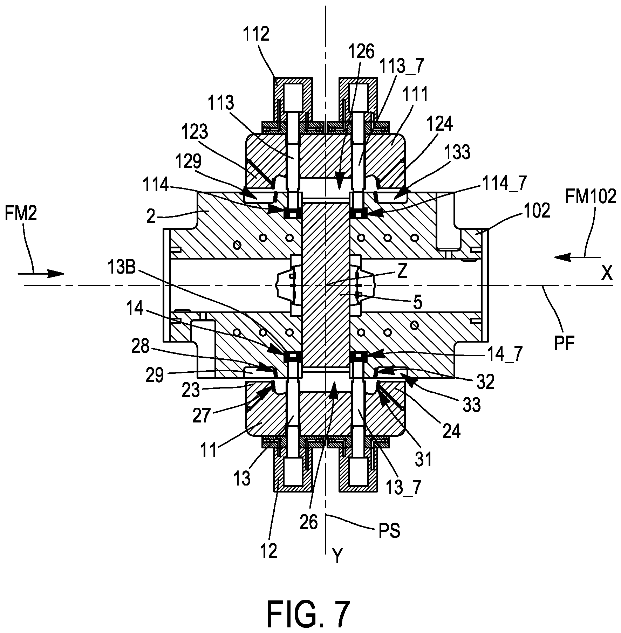

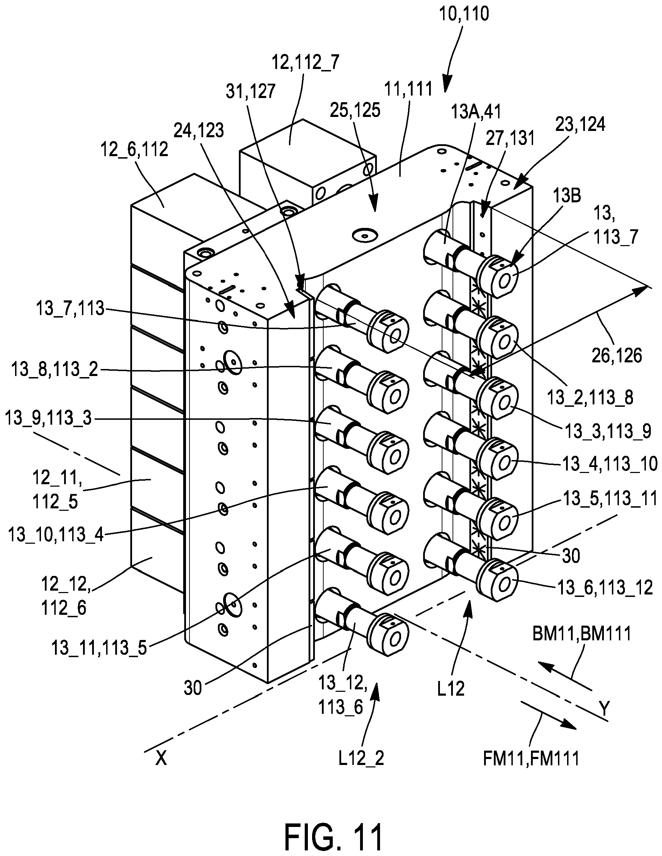

De préférence, le mors présente une forme en C, et comprend à cet effet une première branche 23 et une seconde branche 24 qui sont reliées entre elles par une traverse 25 et qui font saillie dans la direction de verrouillage Y, de sorte à définir entre elles, selon la direction d'accouplement X, un entrefer de serrage 26, tel que cela est bien visible sur les figures 7 et 11.

De préférence, la première branche 23 et la seconde branche 24 viendront se positionner de part et d'autre du premier plan de joint P2, chacune d'un côté différent dudit premier plan de joint P2, de sorte que ledit premier plan de joint P2 s'étend, et de préférence est entièrement compris, dans l'entrefer de serrage 26.

De préférence, la première branche 23 présente une première rampe 27 qui est orientée obliquement par rapport à un plan normal à la direction d'accouplement X, de sorte à pouvoir coopérer avec la première tête 2 pour générer l'effort de serrage F10 par effet de coin, lorsque le moteur de verrouillage 12 rapproche le premier mors 11 du point d'ancrage 14.

De préférence, la première tête 2 comprend à cet effet une première contre-rampe 28 de forme conjuguée à celle de la première rampe 27 de la première branche 23, de sorte que, lorsque le moteur de verrouillage 12 tire sur le tirant 13 et rapproche le premier mors 11 du point d'ancrage 14, la rampe 27 glisse le long de la contre-rampe 28 et génère ainsi un effort de serrage F10 transverse à ladite rampe 27.

La première contre-rampe 28 peut par exemple être façonnée dans une première rainure 29, ici une rainure verticale, creusée dans la première tête 2.

Avantageusement, un tel agencement du premier verrou 10 avec des branches 23, 24 permettant de crocheter les pièces à rapprocher l'une de l'autre est particulièrement robuste et fiable, et ce d'autant que les contraintes liées à la génération de l'effort de serrage F10 peuvent se répartir sur la surface des rampe 27 et contre-rampe 28, et sur la longueur (ici verticale) de la première rainure 29.

Avantageusement, l'utilisation d'une première rampe 27 permet de convertir et d'amplifier l'effort de traction, qui est exercé par le moteur de verrouillage 12 sur le tirant 13 selon la direction de verrouillage Y, en un effort de serrage F10 en compression, qui s'exerce entre les première et seconde branches 23, 24, et qui est orienté selon la direction d'accouplement X, perpendiculaire à la direction de verrouillage Y.

On peut ainsi pincer efficacement l'une contre l'autre les pièces emprisonnées dans entrefer 26, ici la première tête 2 (et la seconde tête 102) et le bloc d'outillage 5.

L'angle d'inclinaison formé par la rampe 27, et, de même, par la contre-rampe 28, par rapport à la direction de verrouillage Y, considéré en projection dans un plan de base (XY), ici horizontal, défini par la direction de verrouillage Y et par la direction d'accouplement X, sera de préférence compris entre 1 degrés et 45 degrés, préférentiellement entre 5 degrés et 30 degrés.

Avantageusement, un tel angle d'inclinaison sera de préférence suffisamment faible pour permettre non seulement d'obtenir une amplification de l'effort de serrage, F10, dont l'intensité sera ainsi supérieure à l'intensité de l'effort de traction développé par le ou les moteurs de verrouillage 12 sur le ou les tirants 13 correspondants, mais également de fournir un verrouillage qui sera non spontanément réversible au regard des coefficients de frottement qui s'exercent entre la première rampe 27 et la première contre-rampe 28, de sorte que la première tête 2 sera maintenue serrée contre le bloc outillage 5 même si le moteur de verrouillage 12 n'est plus alimenté en énergie, et tant que ledit moteur de verrouillage 12 n'aura pas activement forcé un recul du premier mors 11 selon la direction de verrouillage Y et extrait la première branche 23 de la rainure 29 pour dégager la rampe 27 de la contre-rampe 28.

Le verrouillage procuré par le premier verrou 10 sera donc particulièrement puissant et stable.

De préférence, la première rampe 27 et/ou la première contre-rampe 28 seront pourvues de garnitures lubrifiantes 30, telles que des plaquettes en alliage à base de cuivre, éventuellement poreuses et imbibées d'un lubrifiant, tel que de l'huile, qui peut être acheminé par un circuit approprié.

De manière analogue, la seconde branche 24 du premier mors 11 comprendra de préférence une seconde rampe 31 destinée à coopérer avec une seconde contre-rampe 32 ménagée de préférence dans une seconde rainure 33. Lesdites seconde rampe et contre-rampe 31, 32 pourront également être pourvues de garnitures lubrifiantes 30.

Dans l'absolu, on pourrait envisager que la seconde branche 24 vienne en prise contre le bloc d'outillage 5, par exemple contre une face 105U dudit bloc d'outillage 5 qui serait fermée (c'est-à-dire qui serait pleine, et qui ne présenterait donc pas d'ouvertures de canaux destinés à recevoir des matériaux à extruder) et qui serait située à l'opposé, selon la direction d'accouplement X, de la face de jonction 5U contre laquelle vient se plaquer la première tête 2. Selon une telle variante, seule la première tête 2 et le bloc d'outillage 5 seraient présents et pincés l'un contre l'autre au sein de l'entrefer de serrage 26.

Toutefois, de façon particulièrement préférentielle, le premier verrou 10, et plus particulièrement le premier mors 11, est destiné à relier entre elles une première tête 2 et une seconde tête 102, de sorte à pincer le bloc outillage 5 entre la première tête 2 et la seconde tête 102, tel que cela est visible sur les figures 8 à 10, la traverse 25 formant alors un pont qui relie les deux têtes 2, 102 en enjambant le bloc d'outillage 5.

En effet, de façon préférentielle, tel que cela est visible sur les figures 1, 2, 5 et 8, l'installation 1 comprend une seconde tête 102 qui est agencée pour recevoir au moins une seconde extrudeuse 103 destinée à délivrer un second matériau extrudé et qui comprend au moins une seconde voie 104 permettant d'acheminer ledit second matériau extrudé jusqu'au bloc d'outillage 5.

Le bloc d'outillage 5 s'étend alors de préférence, le long de la direction d'accouplement X, depuis une première face de jonction 5U, de préférence normale à ladite direction d'accouplement X, jusqu'à une seconde face de jonction 105U opposée, de préférence parallèle à la première face de jonction 5U, de manière à ce que, en configuration de fermeture, la première tête 2 soit maintenue fixée en appui contre la première face de jonction 5U du bloc d'outillage 5 tandis que la seconde tête 102 est maintenue fixée en appui contre la seconde face de jonction 105U dudit bloc d'outillage 5.

De préférence le premier mors 11 du premier verrou 10 est alors agencé de manière à venir en prise d'une part contre la première tête 2 et d'autre part contre la seconde tête 102 de sorte à pouvoir forcer un rapprochement mutuel, selon la direction d'accouplement X, de la première tête 2 et de la seconde tête 102 qui sont situées de part et d'autre du bloc d'outillage 5, et ainsi générer un effort de serrage F10 qui, tel que cela est illustré sur les figures 8, 9, 10 et 17, provoque un pincement du bloc d'outillage 5 entre la première tête 2 et la seconde tête 102.

Avantageusement, en multipliant les têtes 2, 102 et donc les voies 4, 104, on pourra réaliser en une seule opération de coextrusion un profilé particulièrement complexe, combinant de multiples matériaux.

En outre, un tel agencement, selon lequel le bloc d'outillage 5 est pincé entre les deux têtes 2, 102, en configuration de fermeture, est avantageusement simple, compact et stable.

De façon particulièrement avantageuse, un tel agencement permet notamment d'utiliser un même premier verrou 10 central, et un même mouvement de fermeture FM11 du premier mors 11, et plus globalement un même mouvement de fermeture dudit premier verrou 10, pour serrer simultanément la première tête 2 contre le bloc d'outillage 5 et la seconde tête 102 contre le bloc d'outillage 5, la première tête 2 et la seconde tête 102 agissant en opposition l'une de l'autre selon une même direction d'accouplement X.

De préférence, la première tête 2 et la seconde tête 102 présenteront un agencement sensiblement voire exactement symétrique par rapport à un plan sagittal PS de symétrie qui est normal à a direction d'accouplement X, et qui contient de préférence la direction de verrouillage Y. Les caractéristiques de la seconde tête 102 pourront donc de préférence se déduire *mutatis mutandis* des caractéristiques de la première tête 2.

Ledit plan sagittal PS de symétrie est de préférence situé à mi-distance entre les deux têtes 2, 102, et plus particulièrement à mi-distance entre les surfaces aval 2D, 102D, ici planes et verticales, desdites têtes 2, 102.

De préférence, ledit plan sagittal PS de symétrie coupe le bloc d'outillage 5, ainsi que la traverse 25 du premier mors 11, en leur milieu.

Ledit plan sagittal PS de symétrie correspond au plan vertical (YZ) sur la figure 1.

On notera que, par commodité de description, on utilisera de manière générale des références numériques incrémentées de la valeur 100 pour désigner des éléments qui apparaissent en double au sein de l'installation 1 et qui sont identiques ou correspondants dans leur forme et/ou dans leur fonction, tel que cela est notamment le cas pour la première tête 2 et la seconde tête 102.

Ainsi, notamment, tout comme la première tête 2, la seconde tête 102 est de préférence, tel que cela est visible sur la figure 1, portée par un second chariot 122 monté mobile en translation rectiligne sur le bâti 20 au moyen d'un second rail 121, pour effectuer alternativement un mouvement d'avance FM102 vers le bloc d'outillage 5 pour gagner la configuration de fermeture et un mouvement de recul BM102 opposé, en éloignement du bloc d'outillage 5, pour gagner la configuration d'ouverture. Ledit second rail 121 est de préférence rectiligne et aligné dans le prolongement du premier rail 21, selon une seule et même direction d'accouplement X commune.

En configuration de fermeture, la seconde tête 102 vient de préférence appliquer sa face aval 102D directement en appui étanche contre une seconde face de jonction 105U amont du bloc d'outillage 5, selon un second plan de joint P102 qui est de préférence normal à la direction d'accouplement X, de préférence plan, et de préférence parallèle au premier plan de joint P2.

Avantageusement, le premier verrou 10 vient en prise, respectivement par sa première branche 23 et par sa second branche 24, contre la première tête 2 d'une part et contre la seconde tête 102 d'autre part, mais sans exercer d'action directe sur le bloc d'outillage 5.

Ainsi, on peut préserver l'intégrité du bloc d'outillage 5 et changer aisément ce dernier lorsque l'on souhaite modifier le type de profilé produit.

De préférence, le premier mors 11 est agencé de sorte que sa traverse 25 enjambe le premier plan de joint P2 et le second plan de joint P102, et traverse donc le plan sagittal PS, de manière à ce que la première branche 23 vienne en prise contre la première tête 2 d'un premier côté du bloc d'outillage 5, tandis que la seconde branche 24 vient en prise contre la seconde tête 102 d'un second côté du bloc d'outillage, opposé au premier côté.

De préférence, la seconde branche 24 vient en prise dans une seconde rainure 33, ici verticale, ménagée dans la seconde tête 102.

Ladite seconde rainure 33 comprend une seconde contre-rampe 32 destinée à coopérer avec une seconde rampe 31 de la seconde branche 24.

En projection dans le plan de base (XY), la première rampe 27 et la seconde rampe 31 du premier mors 11 seront orientées selon des directions sécantes (c'est-à-dire non parallèles), et iront en divergeant l'une par rapport à l'autre, par rapport à la traverse 25, dans la direction de verrouillage Y, tel que cela est bien visible sur les figures 4, 7, 10 et 17, de sorte que plus le premier mors 11 s'approche du point d'ancrage 14, plus on obtient un resserrement des têtes 2, 102 l'une vers l'autre, et donc un effort de serrage F10 élevé, à l'encontre du bloc d'outillage 5, selon la direction d'accouplement X.

De préférence, la première rampe 27 et la seconde rampe 31 formeront les limites latérales de l'entrefer de serrage 26, qui présentera de la sorte, en projection dans le plan de base (XY), une ouverture évasée en direction des têtes 2, 102 et du bloc d'outillage 5.

Par ailleurs, l'installation 1 comporte préférentiellement, à l'opposé du premier verrou 10 par rapport au bloc d'outillage 5 selon la direction de verrouillage Y, un second verrou 110.

Ledit second verrou 110 comprend un second mors 111 monté mobile selon ladite direction de verrouillage Y, ici en opposition du premier mors 11, ainsi qu'au moins un second moteur de verrouillage 112 qui est embarqué sur ledit second mors 111 et couplé à un second tirant 113 qui est agencé de manière à assurer une prise contre un second point d'ancrage 114 prévu à cet effet dans la première tête 2, de sorte que l'on peut verrouiller la première tête 2 contre le bloc d'outillage 5 en rapprochant l'un de l'autre, selon une même direction de verrouillage Y commune mais selon des sens de déplacement FM11, FM111 opposés, les mors 11, 111 respectifs du premier verrou 10 et du second verrou 110.

Avantageusement, le second verrou 110 est distinct et indépendant du premier verrou 10.

De préférence, ledit second verrou 110 est symétrique du premier verrou 10.

Plus préférentiellement, le second verrou 110 sera symétrique du premier verrou 10 par rapport à un plan frontal PF de symétrie, qui correspond au plan normal à la direction de verrouillage Y et qui contient la direction d'accouplement X, c'est-à-dire qui correspond ici au plan vertical (XZ).

Le second verrou 110 présente tout ou partie des caractéristiques du premier verrou 10, qui peuvent se déduire *mutatis mutandis.*

En particulier, tel que cela est notamment visible sur la figure 4, le second verrou 110 pourra de préférence présenter une troisième branche 123 et une quatrième branche 124, liées par une traverse 125 et pourvues respectivement d'une troisième rampe 127 et d'une quatrième rampe 131, destinées à coopérer respectivement avec une troisième contre-rampe 128 ménagée dans une troisième rainure 129 creusée dans la première tête 2 et avec une quatrième contre-rampe 132 ménagée dans une quatrième rainure 133 creusée dans la seconde tête 102.

Le second verrou 110 coopère avec le second verrou 10 pour générer l'effort de serrage F10 total qui plaque la première tête 2, et préférentiellement qui plaque à la fois la première tête 2 et la seconde tête 102, contre le bloc d'outillage 5.

De préférence le second verrou 110 présente un agencement et une puissance sensiblement similaires à ceux du premier verrou 10, de sorte que le second verrou 110, de même que le premier verrou 10, contribue sensiblement à la moitié de l'intensité de l'effort de serrage F10 total.

De préférence, l'installation 1 combine une paire de têtes 2, 102 telles que décrites plus haut, mobiles selon la direction d'accouplement X, et de préférence mobiles symétriquement par rapport au plan sagittal PS, voire symétriques l'une de l'autre par rapport au plan sagittal PS, et une paire de verrous 10, 110, mobiles selon la direction de verrouillage Y qui croise, ici perpendiculairement, ladite direction d'accouplement X, lesdits verrous 10, 110 étant de préférence symétriquement mobiles, et plus préférentiellement symétriques l'un de l'autre, par rapport au plan frontal PF perpendiculaire au plan sagittal PS.

De la sorte, dans la mesure où chacun desdits premier et second verrous 10, 110, et plus particulièrement chacun des premier mors 11 et second mors 111, relie la première tête 2 à la seconde tête 102, par un système d'entrefer 26, 126 à rampes 27, 31, 127, 131, alors le rapprochement mutuel FM11, FM111, et de préférence simultané, des premier et second verrous 10, 110 selon la direction de verrouillage Y provoque le serrage antagoniste de la première tête 2 et de la seconde tête 102 à l'encontre l'une de l'autre selon la direction d'accouplement X, et donc le serrage par compression du bloc d'outillage 5 entre lesdites première et second têtes 2, 102.

L'agencement croisé selon l'invention, selon lequel les deux têtes 2, 102 se placent de part et d'autre du bloc d'outillage 5 selon la direction d'accouplement X, ici en vis-à-vis des deux grandes faces latérales dudit bloc outillage 5, tandis que les deux verrous 10, 110 se placent de part et d'autre du même bloc d'outillage 5 mais selon la direction de verrouillage Y, sécante et de préférence perpendiculaire à la direction d'accouplement X, ici donc selon les deux petites faces frontales du bloc d'outillage 5, permet avantageusement d'obtenir une installation 1 compacte qui génère un serrage puissant et stable du bloc d'outillage 5 entre les têtes 2, 102 en configuration de fermeture, et qui permet de libérer facilement le bloc d'outillage 5 et d'accéder aisément à l'intérieur de l'installation 1, notamment à l'espace compris entre les surfaces aval 2D, 102D respectives des deux têtes 2, 102, en configuration d'ouverture.

Bien entendu, toute considération relative à une tête 2, un verrou 10, un mors 11, un moteur de verrouillage 12, un tirant 13 ou un point d'ancrage 14 (etc.) peut rester valable, de manière similaire, de préférence à l'identique, en ce qui concerne l'autre tête 102, verrou 110, mors 111, moteur de verrouillage 112, tirant 113, point d'ancrage 114, etc.

C'est donc par simple commodité de description que l'on fera de préférence référence à la première tête 2, au premier verrou 10, au premier moteur de verrouillage 12, au premier tirant 113, etc., dès lors que les autres éléments homologues peuvent présenter les mêmes caractéristiques.

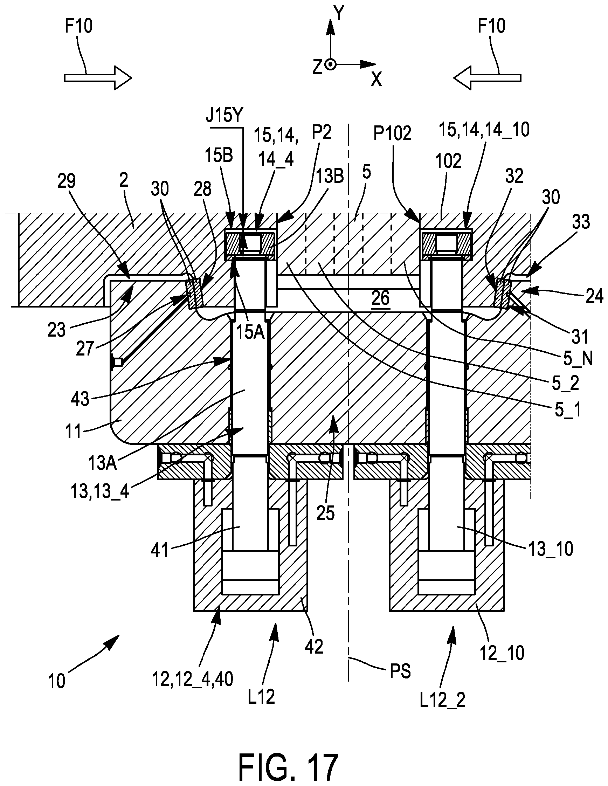

Ainsi, par exemple, quel que soit le tirant 13, 113 considéré, et tel que cela est notamment visible sur les figures 11 et 17, le tirant 13 comprend de préférence une tige 13A, de préférence rectiligne, qui est actionnée par le moteur de verrouillage 12. Ladite tige 13A s'étend selon la direction de verrouillage Y, de préférence parallèlement à ladite direction de verrouillage Y, et possède un renflement 13B, tel qu'un collet 13B, qui est agencé pour venir en prise dans un logement 15 conjugué, tel qu'une encoche 15, qui est prévu dans la première tête 2 pour former le point d'ancrage 14.

Le tirant 13 peut ainsi se présenter sensiblement sous la forme d'un clou, dont la tige 13A forme une première extrémité au niveau de laquelle se trouve le moteur de verrouillage 12, et dont le renflement13B forme l'extrémité libre opposée, qui vient engager la tête 2 et le point d'ancrage 14. Le renflement 13B peut notamment être formé par une bague rapportée et vissée sur l'extrémité du tirant 13, tel que cela est illustré sur la figure 17.

Avantageusement, la tige 13A permet de créer un lien direct, le plus court possible, et possédant une raideur élevée, entre le moteur de verrouillage 12, et donc le premier mors 11, d'une part et la tête 2 d'autre part.

On peut ainsi exercer l'effort de traction nécessaire à la fermeture du premier verrou 10, et donc actionner le premier mors 11, de façon rapide et ferme, sans laisser subsister de jeu ou de comportement élastique qui tendraient à permettre au premier verrou 10 de se relâcher.

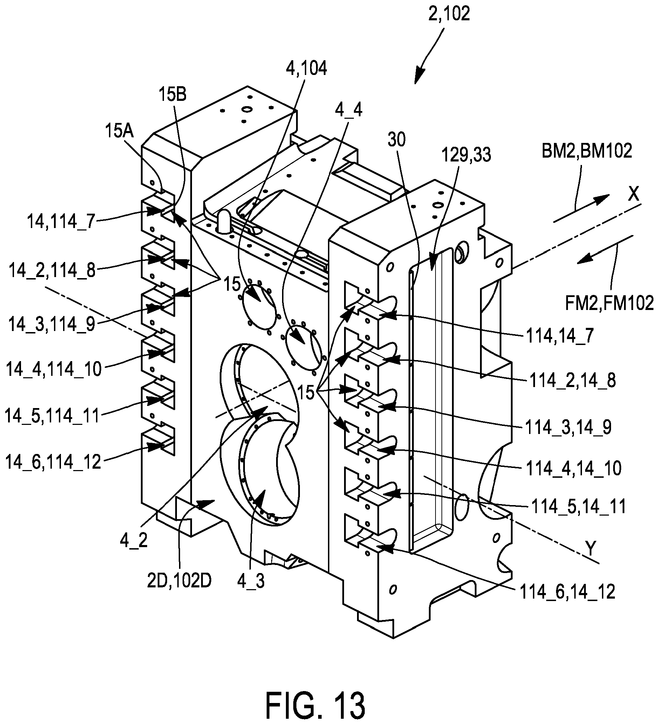

Tel que cela est notamment visible sur les figures 13 et 17, l'encoche 15 pourra de préférence présenter un premier épaulement 15A, qui forme une accroche pour le renflement 13B qui permet au moteur de verrouillage 12 d'exercer, via la tige 13A, un effort de traction sur la première tête 2, et ainsi de rapprocher le premier mors 11 du point d'ancrage 14, pour réaliser la fermeture du premier verrou 10.

De préférence, l'encoche 15 pourra également présenter un second épaulement 15B, tel qu'un fond 15B, qui forme une butée à l'encontre du renflement 13B dans un sens opposé au premier épaulement 15A, et qui permet ainsi au moteur de verrouillage 12 d'exercer, via la tige 13A sollicitée cette fois en compression, un effort de poussée qui permet de reculer activement le premier mors 11, de sorte à éloigner ledit premier mors 11 du premier point d'ancrage 14 et de dégager ledit premier mors 11 de la première tête 2, et le cas échéant de la seconde tête 102, pour réaliser l'ouverture du premier verrou 10.

Ainsi, le système de motorisation du premier verrou 10 est de préférence réversible et bidirectionnel, en ceci que le moteur de verrouillage 12 peut, selon la façon dont il est activé et dont il sollicite le tirant 13, agir activement soit pour fermer le premier verrou 10, en enfonçant les première et seconde branches 23, 24 dans les première et seconde rainures 29, 33, soit pour ouvrir ledit premier verrou 10, en extrayant lesdites première et seconde branches 23, 24 desdites première et seconde rainures 29, 33.

Comme indiqué plus haut, le logement 15 est de préférence agencé pour que le tirant 13, et plus particulièrement le renflement 13B, puisse être extrait dudit logement 15, afin de libérer le tirant 13, lorsque l'installation 1 passe en configuration d'ouverture. A cet effet, le logement 15 sera de préférence ouvert sur la face aval 2D de la tête 2, tel que cela est bien visible sur la figure 13, de sorte qu'un mouvement de recul BM2 de la tête 2 selon la direction d'accouplement X, tandis que le tirant 13 reste provisoirement immobile en étant maintenu dans sa position par rapport au premier mors 11 qui lui-même reste provisoirement immobile par rapport au bâti 20, permet de dégager ladite tête 2 du tirant 13.

Avantageusement, un tel agencement permet en outre de placer les logements 15, et donc les points d'ancrage 14 et une portion des tirants 13, en l'espèce au moins le renflement 13B, en vis-à-vis du bloc d'outillage 5, dans une région de l'espace qui, en projection dans un plan normal à la direction d'accouplement X, par exemple en projection dans le plan sagittal PS, se chevauche avec la zone occupée par le bloc d'outillage 5. Ainsi, l'encombrement du verrou 10 sera particulièrement limité, puisque, au moins en configuration de fermeture, une partie au moins du volume occupé par ledit verrou 10 vient se confondre avec le volume occupé par les têtes 2, 102.

Pour permettre l'insertion des renflements 13B des tirants 13 dans les encoches 15, puis l'extraction des renflements 13B hors des encoches 15, à l'occasion des mouvements FM2, BM2 de la tête 2 correspondante, la longueur des renflements 13B selon la direction de verrouillage Y sera légèrement inférieure à la distance qui sépare le premier épaulement 15A du second épaulement 15B de l'encoche, afin de ménager un jeu axial, noté J15Y sur la figure 17. Ce jeu axial J15Y sera bien entendu rattrapé par les mouvements des tirants 13 lors de l'activation de la fermeture, respectivement de l'ouverture, des verrous 10, 110. En l'espèce le renflement 13B viendra en effet se plaquer contre le premier épaulement 15A en phase de traction pour la fermeture du verrou 10, et respectivement le renflement 13B viendra s'appuyer contre le second épaulement 15B en phase de compression, pour le dégagement du verrou 10.

Par ailleurs, le moteur de verrouillage 12 est de préférence formé par un vérin 40, par exemple un vérin à vis ou, préférentiellement, un vérin hydraulique, vérin 40 qui comprend une tige 41 mobile qui forme le tirant 13, et plus particulièrement qui coïncide avec la tige 13A dudit tirant 13, tel que cela est notamment visible sur la figure 17.

On pourra ainsi actionner le tirant 13 au moyen d'une structure simple, légère, et compacte, qui permet au premier verrou 10 d'intégrer non seulement le moteur de verrouillage 12 mais également le tirant 13 correspondant, tous deux portés par le premier mors 11.

De préférence, tel que cela est notamment visible sur les figures 2, 11, 12 et 17, la chemise 42 du vérin 41, qui forme le carter du moteur de verrouillage 12, sera fixée au dos du premier mors 11, de préférence au dos de la traverse 25, c'est-à-dire sur la face externe de la traverse 25 qui est opposée à la face interne de ladite traverse 25 qui est orientée vers les têtes 2, 102 et vers le bloc d'outillage 5.

La tige 41, 13A traversera alors l'épaisseur dudit premier mors 11, ici l'épaisseur de ladite traverse 25, à travers un passage 43 percé dans ledit premier mors 11, pour pouvoir atteindre le point d'ancrage 14.

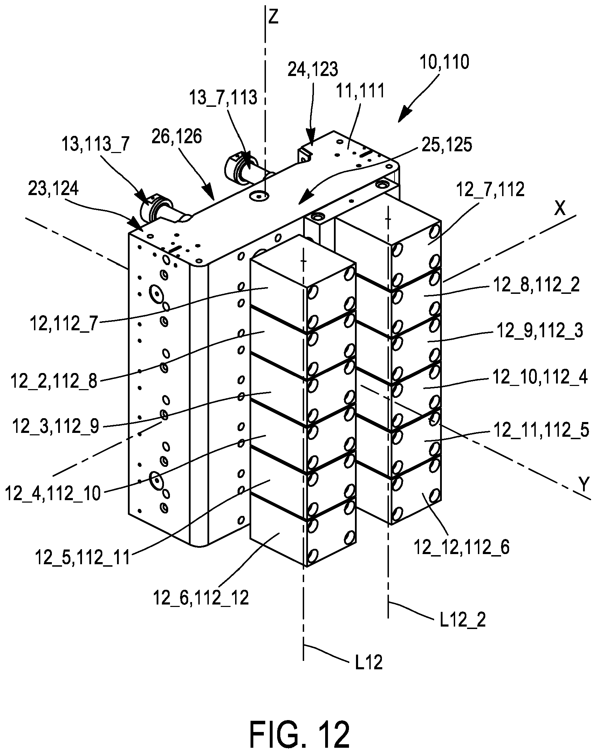

Selon une possibilité de réalisation préférentielle, tel que cela est visible sur les figures 11, 12 et 13, le premier mors 11 du premier verrou 10 embarque une pluralité de moteurs de verrouillage 12, 12_2, 12_3, ... 12_N distincts, avec N entier égal ou supérieur à deux, par exemple N=12 sur les figures 1 et 12.

Lesdits moteurs de verrouillage 12, 12_2, ... 12_N sont couplés chacun à un tirant 13, 13_2, 13_3, ... 13_N propre, de sorte à pouvoir agir en traction à l'encontre d'une pluralité de points d'ancrage 14, 14_2, 14_3, ... 14_6, répartis sur la première tête 2, respectivement une pluralité de points d'ancrage 14_7, 14_8, ... 14_12 répartis sur la seconde tête 102.

Avantageusement, une telle pluralité de moteurs de verrouillage 12, 12_2, 12_3, ... 12_N permet de répartir efficacement l'effort de serrage F10 sur le premier mors 11 et sur les première et second têtes 2, 102, et donc d'obtenir un serrage équilibré et robuste ainsi qu'une étanchéité efficace.

Un tel agencement permet en outre de générer un effort de serrage F10 global de forte intensité, tout en utilisant des moteurs de verrouillage légers et de petites dimensions, qui mettent individuellement en œuvre des efforts de traction élémentaires relativement modestes.

Ainsi, on assure la longévité des organes mécaniques, et notamment des moteurs de verrouillage 12, 12_2... et des tirants 13, 13_2...

De préférence, on comptera autant de tirants 13, 13_2... individuels et de points d'ancrage 14, 14_2... distincts que de moteurs de verrouillage 12, 12_2...

De la sorte, les moteurs de verrouillage 12, 12_2... pourront agir et être contrôlés de manière indépendante les uns des autres, de façon particulièrement fine.

En outre, la duplication au sein du verrou 10, 110 de moteurs de verrouillage 12, 12_2, ..., respectivement de tirants 13, 13_2, ... qui sont identiques les uns aux autres, et donc potentiellement interchangeables, permet une standardisation des composants constitutifs desdits verrous 10, 110, ce qui simplifie l'assemblage de chaque verrou 10, 110 et l'entretien de celui-ci.

De préférence, lors de la fermeture, l'activation des moteurs de verrouillage 12, 12_2...12_12 d'un même mors 11 sera réalisée de façon synchrone, de sorte que lesdits moteurs de verrouillage agissent simultanément pour rapprocher le mors 11 des têtes 2, 102.

De préférence, tel que cela est notamment visible sur les figures 1, 2, 3 et 12, au moins certains, voire la totalité, des moteurs de verrouillage 12, 12_2, ... 12_6 de la pluralité de moteurs de verrouillage 12, 12_2, ... 12_12 sont étagés selon une troisième direction, dite « direction d'étagement » Z, qui est normale au plan de base (XY) formé par la direction d'accouplement X et la direction de verrouillage Y. Ici, la direction d'étagement Z coïncidera de préférence avec la verticale.

De façon plus préférentielle, lesdits moteurs de la pluralité de moteurs de verrouillage 12, 12_2, ... 12_6 sont alignés les uns par rapport aux autres parallèlement à ladite direction d'étagement Z, selon une première rangée L12.

Ici encore, un tel agencement, qui permet ici en particulier un empilement vertical des moteurs de verrouillage 12, 12_2, 12_6 de la première rangée L12, favorise la simplicité et la compacité du verrou 10 et de l'installation 1.

De préférence, les encoches 15 qui forment les points d'ancrage 14, 14_2, ... 14_6 et qui sont destinées à engager les tirants 13, 13_2, ... 13_6 desdits moteurs de verrouillage 12, 12_2, ... 12_6 de la première rangée L12 sont également alignées en série, parallèlement à la direction d'étagement Z, tel que cela est visible sur les figures 3 et 13.

De préférence, toutes lesdites encoches 15 seront identiques dans leur forme et leurs dimensions, ce qui simplifiera la fabrication de la première tête 2, par exemple en ne requérant que la simple répétition d'un seul et même programme d'usinage pour former les encoches 15 l'une après l'autre, et contribuera à garantir l'interchangeabilité des tirants 13, 13_2, ... et des moteurs de verrouillage 12, 12_2, ... au sein d'un même mors 11.

De préférence, la direction d'étagement Z coïncide avec la direction d'extension de la rainure 29 qui est creusée dans la première tête 2 et destinée à recevoir la première branche 23 du mors 11.

De la sorte, les encoches 15, destinées à engager chacune un tirant 13, 13_2, 13_6 correspondant, suivent de préférence le tracé de ladite rainure 29, et plus préférentiellement suivent ainsi un tracé sensiblement parallèle au premier plan de joint P2, et sont avantageusement réparties sur la longueur de ladite rainure 29, et donc sur la hauteur du premier mors 11.

Ceci permet d'assurer une bonne répartition, équilibrée, des efforts élémentaires de traction exercés par les tirants 13, 13_2... sur la première tête 2, et donc une répartition relativement homogène de l'effort de serrage F10 résultant, sur ladite hauteur du premier mors 11, et sur la hauteur correspondante de la première tête 2.

De façon plus préférentielle, lorsque l'installation 1 comprend une seconde tête 102 telle que décrite plus haut, le premier mors 11 du premier verrou 10 embarque d'une part une première rangée L12 de moteurs de verrouillage 12, 12_2, 12_3, 12_4, 12_5, 12_6, alignés selon une direction d'étagement Z normale à un plan de base (XY) formé par les directions d'accouplement X et de verrouillage Y, et dont les tirants 13, 13_2, 13_3, 13_4, 13_5, 13_6 respectifs viennent en prise dans une première pluralité de points d'ancrage 14, 14_2, 14_3, 14_4, 14_5, 14_6 ménagés dans la première tête 2, et d'autre part, tel que cela est visible sur la figure 12, une seconde rangée L12_2 de moteurs de verrouillage 12_7, 12_8, 12_9, 12_10, 12_11, 12_12, alignés selon la direction d'étagement Z, parallèlement à la première rangée L12, et dont les tirants respectifs 13_7, 13_8, 13_9, 13_10, 13_11, 13_12 viennent en prise dans une seconde pluralité de points d'ancrage 14_7, 14_8, 14_9, 14_10, 14_11, 14_12 ménagés dans la seconde tête 102, tel que cela est visible notamment sur la figure 3.

Avantageusement, on obtiendra ainsi un serrage homogène de chaque tête 2, 102, et une excellente étanchéité au niveau de chacun des deux plans de joint P2, P102.

On notera que, de préférence, au vu de l'existence de deux verrous 10, 110 agissant de manière sensiblement symétrique, chacune des première et seconde têtes 2, 102 comprend de préférence deux séries d'encoches 15 formant deux rangées L12, L12_2 de points d'ancrage dans la tête 2, 102 concernée, ici 14, 14_2, 14_3, 14_4, 14_5, 14_6 pour la première rangée de la première tête 2 et 114, 114_2, 114_3, 114_4, 114_5, 114_6 pour la seconde rangée de la première tête 2, respectivement 14_7, 14_8, 14_9, 14_10, 14_1 1, 14_12 pour la première rangée de la seconde tête 102 et 114_7, 114_8, 114_9, 114_10, 114_11, 114_12 pour la seconde rangée de la seconde tête 102, chacune desdites rangées d'une même tête 2, 102 étant destinées à coopérer avec les tirants 13, 113 correspondants d'un verrou 10, 110 distinct.

De préférence, chaque mors 11, 111 pourra comprendre un nombre N pair de moteurs de verrouillage 12, à titre indicatif compris entre quatre et seize moteurs de verrouillage 12, par exemple douze moteurs de verrouillage 12, comme cela est illustré sur les figures, lesdits moteurs de verrouillage 12, et leurs tirants respectifs 13, étant de préférence répartis par moitié sur chaque rangée L12, L12_2, c'est-à-dire ici préférentiellement à raison de six par rangée L12, L12_2.

Dans tous les cas, quels que soient le nombre et l'agencement du ou des moteurs de verrouillage 12 sur le mors 11 considéré, et lorsque le mors 11 considéré comprend une première branche 23 et une seconde branche 24 délimitant entre elles un entrefer de serrage 26 comme décrit plus haut, le ou les tirants 13 associés audit mors 11 s'étendent de préférence dans l'entrefer de serrage 26.

Le ou les tirants 13 feront ainsi saillie dans l'entrefer de serrage 26, à distance de chacune des première et seconde branches 23, 24 selon la direction d'accouplement X.

Un tel agencement favorisera d'une part la compacité du verrou 10, et d'autre part une répartition le long de la traverse 25, le long de la direction d'accouplement X, de l'effort de traction qui est exercé par ledit ou lesdits tirants 13 selon la direction de verrouillage.

Ceci favorisera un engagement régulier des première et seconde branches 23, 24 du mors 11 dans la première rainure 29 et respectivement dans la seconde rainure 33, le long de la première contre-rampe 28 et respectivement le long de la seconde contre-rampe 32, sans risque de bloquer le mors 11 par arc-boutement.

De façon particulièrement préférentielle, lorsque les moteurs de verrouillage 12, 12_2... d'un même mors 11 sont répartis en deux rangées L12, L12_2 parallèles sur ledit mors 11, les deux rangées de tirants 13, 13_2... correspondants s'étendront dans l'entrefer de serrage 26.

De préférence, les deux rangées L12, L12_2 de moteurs de verrouillage, et donc les deux rangées de tirants 13, 13_2, ... correspondants, s'étendront de part et d'autre du plan sagittal PS qui passe par le milieu dudit entrefer 26 le long de la direction d'accouplement X, c'est-à-dire une rangée d'un côté dudit plan sagittal PS et l'autre rangée de l'autre côté dudit plan sagittal PS, et plus préférentiellement s'étendront de part et d'autre du bloc d'outillage 5, une rangée L12 en amont de la première surface de jonction 5U (en considération du sens d'amenée des matériaux extrudés de la première tête 2 au bloc d'outillage 5), du côté de la première tête 2, et l'autre rangée L12_2 en amont de la seconde surface de jonction 105U (en considération du sens d'amenée des matériaux extrudés de la seconde tête 102 au bloc d'outillage 5), du côté de la seconde tête 102.

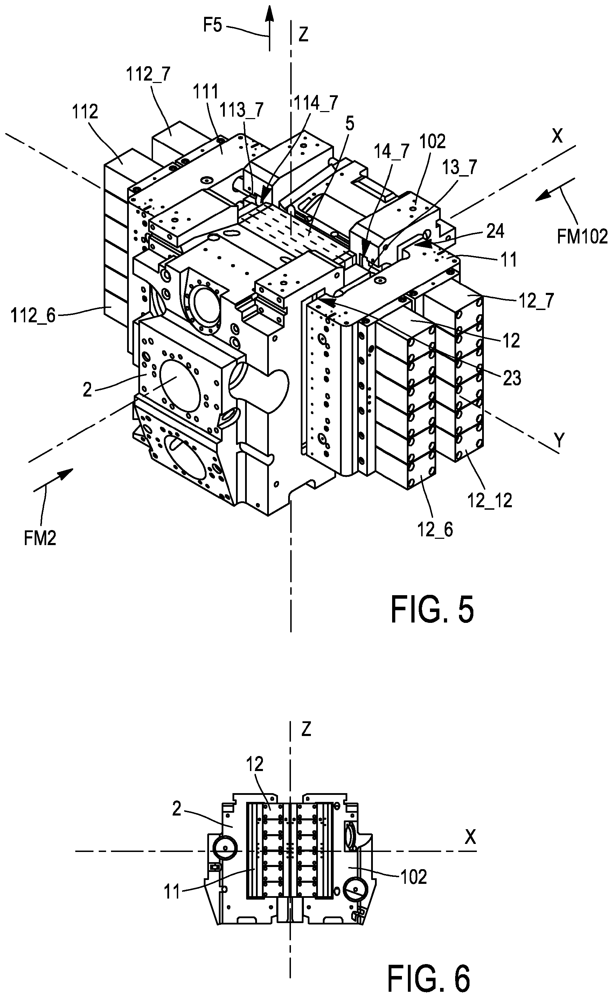

De préférence, le bloc d'outillage 5 peut comprendre une cassette qui contient une pluralité de plaques 5_1, 5_2, ... 5_N qui sont superposées selon la direction d'accouplement X dans le sens de leur épaisseur, tel que cela est schématisé en pointillés sur les figures 5 et 17, de manière à définir entre plaques 5_1, 5_2, ... 5_N contiguës un ou plusieurs canaux qui permettent d'acheminer le ou les matériaux extrudés en provenance de la ou des extrudeuses 3, 103, et notamment ici en particulier qui permettent d'acheminer au moins les premier et second matériaux extrudés en provenance de la première extrudeuse 3 et de la seconde extrudeuse 103, et plus globalement les matériaux extrudés en provenance des différentes extrudeuses équipant les première et second têtes 2, 102 de l'installation 1, jusqu'à la filière 6.

Un tel agencement, connu en soi, permet de disposer d'un outillage multi-canaux compact, facile à démonter et à nettoyer.

De préférence, les plaques 5_1, 5_2, ... 5_N sont disposées de façon normale à la direction d'accouplement X, de sorte que leurs faces principales, c'est-à-dire de plus grande superficie, soient parallèles entre elles et parallèles aux surfaces de jonction 5U, 105U, et donc parallèles aux plans de joint P2, P102. De la sorte, le serrage des plaques obtenu par le rapprochement et le serrage des première et seconde têtes 2, 102 à l'encontre l'une de l'autre est particulièrement robuste et stable.

Plus préférentiellement, le bloc d'outillage 5 définit entre les plaques 5_1, 5_2, ... 5_N un ou plusieurs canaux qui permettent d'acheminer le ou les matériaux extrudés selon une direction dite « direction d'écoulement » F5.

Ladite direction d'écoulement F5 s'entend ici de la direction principale d'écoulement que suivent les matériaux extrudés au sein du bloc outillage 5 après que lesdits matériaux ont rejoint le canal inter-plaques qui leur est dévolu. Pour rejoindre lesdits canaux inter-plaques, les matériaux extrudés passent de préférence au préalable, de façon connue en soi, à travers des embouchures d'entrée qui communiquent avec la tête 2, 102 concernée et qui sont quant à elles creusées dans la ou les plaques 5_1, 5_2, ... 5_N concernées, parallèlement à la direction d'accouplement X et donc de façon normale auxdites plaques, afin de traverser l'épaisseur de ladite ou desdites plaques qui séparent la face de jonction 5U, 105U, et donc la tête 2, 102 correspondante, dudit canal.

Ladite direction d'écoulement F5 est ici parallèle aux plaques, et plus préférentiellement normale au plan de base (XY) formé par la direction d'accouplement X et la direction de verrouillage Y.

Avantageusement, un tel agencement de l'invention sera particulièrement compact, puisqu'il permet d'occuper utilement les différentes faces du bloc d'outillage 5, à savoir ici les grandes faces latérales (faces principales) pour recevoir les têtes 2, 102, les petites faces frontales en vis-à-vis des mors 11, 111, et la face supérieure pour former la filière 6 de sortie du profilé.

Encore plus préférentiellement, la direction d'écoulement F5 est parallèle à la direction d'étagement Z des moteurs de verrouillage 12, 12_2, ... 12_6 (respectivement 12_7, ... 12_12) au sein du ou des mors 11, 111 considérés, afin que les moteurs de verrouillage 12, 12_2, ... 12_6 (respectivement (12_7, ... 12_12) et les points d'ancrage 14, 14_2, ... 14_6 (respectivement 14_7, ... 14_12) correspondants soient répartis le long de ladite direction d'écoulement F5.

De la sorte, les points d'ancrage 14, 14_2, ... seront répartis sur la longueur des plaques 5_1, 5_2, ... 5_N, tout le long du chemin que les matériaux extudés parcourent au sein des canaux, selon la direction d'écoulement F5, si bien que l'on obtiendra une action de fermeture « multipoints » du verrou 10 sur toute la longueur du bloc d'outillage 5, ici sur toute la hauteur verticale dudit bloc d'outillage 5, ce qui assurera une bonne étanchéité du bloc d'outillage 5, notamment une bonne étanchéité entre chaque paire de plaques 5_1, 5_2, ... 5_N contiguës, sur toute la longueur du chemin parcouru par chaque matériau extrudé au sein dudit bloc d'outillage 5.

De même, on notera que les première, seconde, troisième et quatrième rainures 29, 33, 129, 133 recevant respectivement les première, seconde, troisième et quatrième branches 23, 24, 123, 124 des mors 11, 111 s'étendent également en longueur parallèlement à la direction d'écoulement F5 et donc parallèlement à la longueur (ici verticale) des plaques 5_1, 5_2, ... 5_N, ce qui permet de répartir l'effort de serrage F10 sur toute la longueur des canaux du bloc d'outillage 5, et donc d'assurer une excellente étanchéité en configuration de fermeture.

Selon une caractéristique préférentielle qui peut constituer une invention à part entière, le premier verrou 10 est porté par un premier dispositif de guidage de verrou 50.

De manière analogue, le second verrou 110 sera de préférence porté par un second dispositif de guidage de verrou 150 analogue, dont les caractéristiques pourront se déduire *mutatis mutandis* de celles du premier dispositif de guidage de verrou 50.

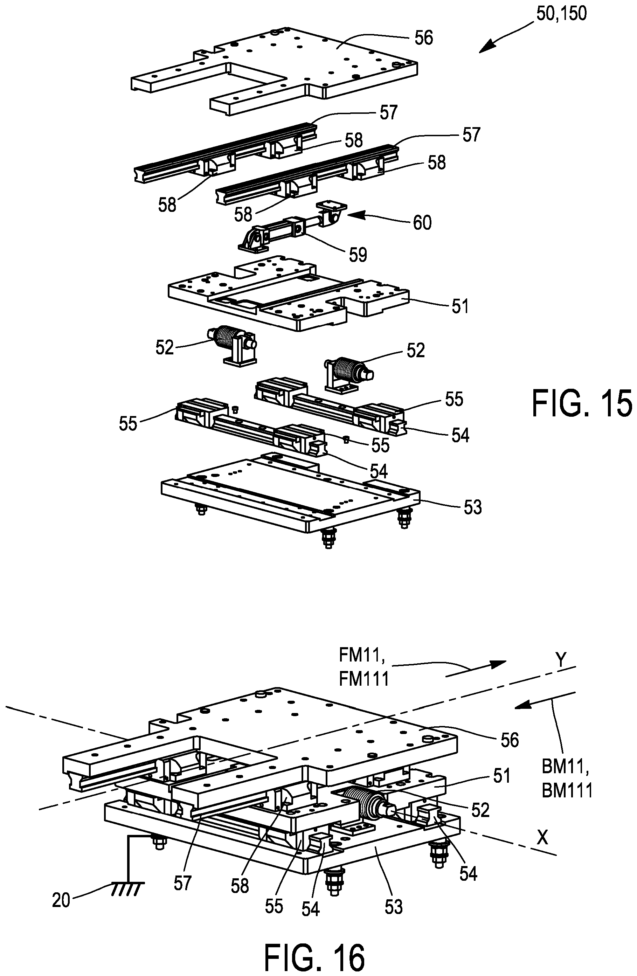

De préférence, le premier dispositif de guidage de verrou 50 comprend, tel que cela est détaillé sur les figures 15 et 16, une platine 51 dite « platine de centrage latéral » 51 qui autorise un déplacement guidé du premier mors 11 dudit premier verrou 10 en translation selon la direction d'accouplement X et qui comporte au moins un ressort de rappel 52 qui tend à ramener ledit premier mors 11, et plus globalement le premier verrou 10, vers une position de centrage prédéterminée le long de ladite direction d'accouplement X.

La position de centrage est de préférence choisie de telle sorte que, lorsque le premier verrou 10 se trouve dans ladite position de centrage, le premier verrou 10 se trouve alors centré sur le plan sagittal PS, qui divise ainsi ledit premier verrou 10 en deux moitiés égales et symétriques. En pratique, le premier verrou 10, et plus particulièrement le premier mors 11, se retrouve ainsi centré sur le bloc d'outillage 5.

La position de centrage correspond à la position théorique que doit idéalement présenter l'axe de verrouillage Y, le long de l'axe d'accouplement X, pour permettre au premier mors 11, et plus particulièrement à la première branche 23 et à la seconde branche 24, d'engager convenablement les rainures 29, 33 des têtes 2, 102, c'est-à-dire pour permettre à la première rampe 27 et à la seconde rampe 31 d'engager convenablement la première contre-rampe 28 et la seconde contre-rampe 32, sans interférence, ni choc, ni blocage.

A ce titre, on notera que le ressort de rappel 52 procure un effet de suspension élastique du premier verrou 10 selon la direction d'accouplement X, qui assure donc un centrage automatique dudit verrou 10.

En outre, le degré de liberté en translation qu'offre la platine de centrage latéral 51 selon la direction d'accouplement X permet avantageusement au premier mors 11 d'adapter spontanément, ici de façon élastique eu égard à la présence du ressort de rappel 52, sa position le long de la direction d'accouplement X lors de l'engagement dudit premier mors 11 dans les têtes 2, 102, et plus particulièrement lors du positionnement des tirants 13 dans les points d'ancrage 14, puis lors de l'engagement et de la progression des rampes 27, 31 du mors 11 le long des contre-rampes 28, 32 desdites têtes 2, 102.

Le premier mors 11, et plus globalement le premier verrou 10, est donc capable de s'auto-centrer afin de compenser un éventuel défaut d'alignement initial dudit premier mors 11 par rapport aux têtes 2, 102.

De préférence, la platine de centrage latéral 51 est montée mobile en translation et guidée sur une embase 53, elle-même fixée au bâti 20.

Le guidage en translation peut par exemple être obtenu au moyen de rails 54 parallèles à la direction d'accouplement X et sur lesquels coulissent des chariots à billes 55, sur lesquels est fixée la platine de centrage latéral 51.

Par ailleurs, isolément de, ou préférentiellement en combinaison avec, une platine de centrage latéral 51 telle que décrite ci-dessus, le premier dispositif de guidage de verrou 50 peut de préférence comprendre une platine 56 dite « platine de verrouillage » 56 qui guide le déplacement en translation du premier mors 11, et plus globalement du premier verrou 10, selon la direction de verrouillage Y, pour permettre audit premier mors 10, et plus globalement au premier verrou 10, d'adopter alternativement une position d'engagement, dans laquelle ledit premier mors 11 coopère avec la première tête 2, et le cas échéant également avec la second tête 102, pour générer l'effort de serrage F10, et une position de retrait, dans laquelle le premier mors 11 libère la première tête 2, et le cas échéant la seconde tête 102, pour autoriser la séparation du bloc d'outillage 5.

De préférence, la platine de verrouillage 56 sera portée par la platine de centrage latéral 51, de sorte que le premier dispositif de guidage de verrou 50 forme une table de guidage à deux étages de translation croisés, le premier étage étant formé par la platine de centrage latéral 51, et le second étage par la platine de verrouillage 56.

De même que pour la platine de centrage latéral 51, la platine de verrouillage 56 pourra être guidée en translation au moyens de rails 57 et de chariots à billes 58.

De préférence, la platine de verrouillage 56 comprend une butée de recul 59 qui définit une position de retrait prédéterminée selon la direction de verrouillage Y.

En pratique, ladite butée de recul 59 définit une position de retrait déterministe dans laquelle on est certain que le mors 11, et plus particulièrement ses branches 23, 24, sont dégagés en retrait de la trajectoire que doivent emprunter les première et seconde têtes 2, 102 selon la direction d'accouplement X pour venir au contact du bloc d'outillage 5, et ce afin que lesdites branches 23, 24 n'interfèrent pas avec lesdites têtes 2, 102 lorsque celles-ci opèrent leurs mouvements d'avance FM2, FM102 respectifs.

Ladite position de retrait correspond également à une position de référence du mors 11, et donc des moteurs de verrouillage 12 et des tirants 13 portés par ledit mors 11, dans laquelle, lorsque les têtes 2, 102 se trouvent en configuration d'ouverture, à distance du bloc d'outillage 5 et de telle manière que les tirants 13 se trouvent, dans la direction d'accouplement X, en-dehors des encoches 15 formant les points d'ancrage 14 (figure 4), alors lesdits tirants 13 sont placés de manière à ce que leurs renflements 13B se trouvent dans l'alignement desdites encoches 15 selon cette même direction d'accouplement X, si bien que lors du mouvement d'avance FM2, FM102 opéré par lesdites têtes 2, 102 selon ladite direction d'accouplement X, lesdites encoches 15 puissent venir engager les tirants 13, et plus particulièrement permettent aux renflements 13B desdits tirants 13 de pénétrer dans les encoches 15 et ainsi de se placer en vis-à-vis des points d'ancrage 14 (figure 7), sans causer d'interférence, et notamment sans causer de blocage, entre les tirants 13 et les têtes 2, 102.

De préférence, la butée de recul 59 est configurée de telle sorte que, lorsque les tiges 41, 13A des tirants 13 sont totalement sorties des chemises 42 des moteurs de verrouillage 12, c'est-à-dire lorsque les renflements 13B des tirants sont les plus éloignés, selon la direction de verrouillage Y, du mors 11, 111 qui les porte et de la face interne de la traverse 25, 125 correspondante, alors le placement des mors 11, 111 dans la position de retrait déterminée par la butée de recul 59 a pour conséquence de placer les renflements 13B à distance, selon l'axe de verrouillage Y, à la fois du premier épaulement 15A formant point d'ancrage 14 et du second épaulement 15B formant paroi de fond de chaque encoche 15, c'est-à-dire de ménager un jeu d'insertion de part et d'autre de chaque renflement 13B selon l'axe de verrouillage Y. Typiquement, ce jeu d'insertion vaudra, de chaque côté du renflement 13B, environ la moitié du jeu axial J15Y total, soient environ J15Y/2.

De préférence, la platine de verrouillage 56 comprend un vérin de recul 60, agencé pour manœuvrer ladite platine de verrouillage 56, et donc le mors 11, en retrait selon la direction de verrouillage Y, dans un mouvement de recul BM11, BM111.

La butée de recul 59 est alors de préférence incorporée audit vérin de recul 60, et peut plus particulièrement correspondre à l'une des butées de fin de course dudit vérin de recul, par exemple à la butée de fin de course sur laquelle la tige du vérin de recul 60 vient s'appuyer lorsque ladite tige dudit vérin de recul est entièrement rentrée dans la chemise dudit vérin de recul 60.

Une séquence de fermeture de l'installation 1 va maintenant être brièvement décrite en référence aux figures.

Initialement, l'installation 1 se trouve en configuration d'ouverture, tel que cela est le cas sur les figures 1 à 4.

Les chariots 22, 122, et donc la première tête 2 et la seconde tête 102 ont été reculés le long de l'axe d'accouplement X, selon des mouvements de recul BM2, BM102, et se trouvent ainsi à distance du bloc d'outillage 5 et des tirants 13 des verrous 10, 110.

Les premier et second verrous 10, 110, et plus particulièrement leurs premier et second mors 11, 111 respectifs, se trouvent en configuration de dégagement le long de l'axe de verrouillage Y, placés et maintenus par leurs platines de verrouillage 56 respectives, par l'action des vérins de recul 60, dans leurs positions de retrait respectives telles que définies par les butées de recul 59, et donc à l'écart du bloc d'outillage 5, de part et d'autre dudit bloc d'outillage 5 et du plan frontal PF.

Lesdits premier et second verrous 10, 110 se trouvent également dans leur position de centrage le long de l'axe d'accouplement X, telle que définie par le ressort de rappel 52 de leurs platines de centrage latéral 51 respectives, c'est-à-dire ici sensiblement centrés sur le plan sagittal PS du bloc d'outillage 5.

Dans cette configuration d'ouverture, les renflements 13B des tirants 13 sont situés hors des encoches 15 correspondantes, et alignés avec lesdites encoches 15 selon la direction d'accouplement X, tout en prévoyant un jeu d'insertion, ici sensiblement J15Y/2, entre chaque renflement 13B et les épaulements 15A, 15B de l'encoche 15 qui lui correspond. A cet effet, les tiges 41 des vérins 40 qui forment les moteurs de verrouillage 12 sont de préférence totalement sorties, tel que cela est visible sur la figure 4, de sorte que les renflements 13B des tirants 13 occupent, selon l'axe de verrouillage Y, leur position qui est la plus éloignée possible du mors 11, 111 qui porte lesdits tirants 13 et, donc la plus éloignée de la chemise 42 de leur moteur de verrouillage 12 respectif, en direction du bloc d'outillage 5 et du mors 111, 11 qui est opposé au mors 11, 111 qui porte les tirants 13 concernés, tandis que chaque platine de verrouillage 56 portant le mors 11, 111 concerné se trouve dans la position de retrait telle que définie par la butée de recul 59.

On manœuvre ensuite les chariots 22, 122 pour rapprocher les têtes 2, 102 l'une de l'autre, le long de la direction d'accouplement X, selon leurs mouvements d'avance FM2, FM102. On poursuit de de préférence ces mouvements jusqu'à ce que la face aval 2D, 102D de chaque tête 2, 102 vienne s'appliquer, selon le plan de joint P2, P102, contre la face de jonction 5U, 105U correspondante du bloc d'outillage 5.

Ce faisant, par simple translation selon la direction d'accouplement X, la première tête 2, et plus particulièrement les encoches 15 formant une première série de point d'ancrage 14, 14_2, ... 14_6 viennent coiffer une première série de tirants 13, 13_2, ... 13_6 portés par le premier mors 11, et situés le long de la première branche 23, tandis que, simultanément, les encoches 15 formant une troisième série de points d'ancrage 114, 114_2, ..., 114_6 appartenant à cette même première tête 2 viennent coiffer une troisième série de tirants 113, 113_2, ... 113_6 appartenant au deuxième mors 111 et répartis le long de la troisième branche 123, comme cela est visibles sur les figures 5 et 7.

De la sorte, les renflements 13B des tirants 13 pénètrent dans lesdites encoches 15 et viennent crocheter les premiers épaulements 15A pour s'ancrer dans les points d'ancrage 14 correspondants.

Avantageusement, tous les tirants 13, 113 des premier et second verrous 10, 110 qui sont situés du même côté que la tête 2 concernée par rapport au plan sagittal PS sont engagés dans les points d'ancrage 14, 114 simultanément, par un seul et même mouvement d'approche FM2 de ladite tête 2 le long de la direction d'accouplement X.

De manière comparable, de l'autre côté du plan sagittal PS, de préférence de façon symétrique par rapport audit plan sagittal PS, et de préférence de façon simultanée au mouvement de la première tête 2, la seconde tête 102, et plus particulièrement les encoches 15 formant une seconde série de point d'ancrage 14_7, 14_8, ... 14_12, viennent coiffer une seconde série de tirants 13_7, 13_8, ... 13_12 portés par le premier mors 11, et situés le long de la seconde branche 24, tandis que, simultanément, les encoches 15 formant une quatrième série de points d'ancrage 114_7, 114_8, ..., 114_12 appartenant à cette même seconde tête 102 viennent coiffer une quatrième série de tirants 113_7, 113_8, ... 113_12 appartenant au second mors 111 et répartis le long de la quatrième branche 124.

Ce faisant, et tel que cela est visible sur la figure 7, la première rainure 29 appartenant à la première tête 2 vient se placer en face de la première branche 23 du premier mors 11, dans l'alignement de ladite première branche 23 selon la direction de verrouillage Y, tandis que, de l'autre côté du plan frontal PF, la troisième rainure 129 appartenant à cette même première tête 2 vient se placer en face de la troisième branche 123 appartenant au second mors 11.

De manière analogue, de l'autre côté du plan sagittal PS, la seconde rainure 33 appartenant à la seconde tête 102 vient se placer en face de la seconde branche 24 du premier mors 11, dans l'alignement de ladite seconde branche 24 selon la direction de verrouillage Y, tandis que, de l'autre côté du plan frontal PF, la quatrième rainure 133 appartenant à cette même seconde tête 102 vient se placer en face de la quatrième branche 124 appartenant au second mors 111.

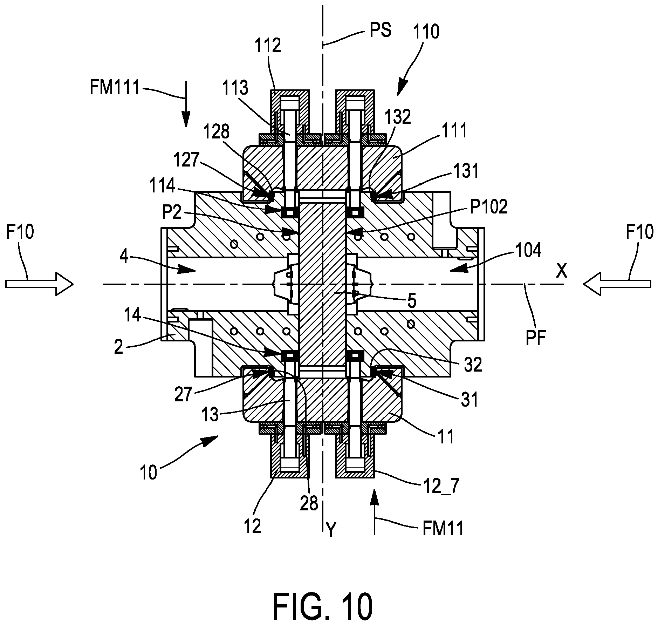

On procède alors à l'activation (en traction) des moteurs de verrouillage 12 pour forcer le déplacement FM11, FM111 des verrous 10, 110, et plus particulièrement des mors 11, 111 à l'encontre des têtes 2, 102, le long de la direction de verrouillage Y, tel que cela est illustré sur la figure 8, et ainsi provoquer, par l'action et le glissement des rampes 27, 31, 127, 131 à l'encontre de leurs contre-rampes 28, 32, 128, 132 respectives, le serrage desdites têtes 2, 102 contre le bloc d'outillage 5, de part et d'autre du plan sagittal PS, tel que cela est visible sur les figures 10 et 17.

Ainsi, plus particulièrement, d'un côté du plan frontal PF, la première rangée L12 de moteurs de verrouillage 12, ... 12_6 tirent, de préférence de façon simultanée, sur leur première rangée de tirants 13, ... 13_6 pour forcer le premier mors 11 à se rapprocher de la première série de points d'ancrage 14, ... 14_6, et plus particulièrement pour amener, introduire et enfoncer la première branche 23 dudit premier mors 11 dans la première rainure 29 appartenant à la première tête 2, et ainsi forcer le glissement de la première rampe 27 le long de la première contre-rampe 28.

Simultanément à cette action de la première rangée de moteurs de verrouillage 12, ... 12_6, du même côté du plan frontal PF, la seconde rangée L12_2 de moteurs de verrouillage 12_7, ... 12_12 tirent, de préférence de façon simultanée, sur leur seconde rangée de tirants 13_7, ... 13_12 pour forcer le premier mors 11 à se rapprocher de la seconde série de points d'ancrage 14_7, ... 14_12, et plus particulièrement pour amener, introduire et enfoncer la seconde branche 24 dudit premier mors 11 dans la seconde rainure 33 appartenant à la seconde tête 102, et ainsi forcer le glissement de la seconde rampe 31 le long de la seconde contre-rampe 32.

Ce mouvement d'avance FM11 du premier mors 11 est avantageusement guidé par les rails 57 de la platine de verrouillage 56, qui accompagne librement ledit mouvement du mors, au cours duquel la platine de verrouillage 56 quitte sa butée de recul 59, ici en permettant à la tige du vérin de recul 60 de sortir librement de la chemise dudit vérin de recul 60 pour suivre le déplacement de la platine de verrouillage 56 par rapport à la platine de centrale latéral 51 et plus globalement par rapport au bâti 20.

De manière analogue, et de préférence de manière simultanée à l'activation du premier verrou 10, de l'autre côté du plan frontal PF, la troisième rangée de moteurs de verrouillage 112, ... 112_6 tirent, de préférence de façon simultanée, sur leur troisième rangée de tirants 113, ... 113_6 pour forcer le second mors 111 à se rapprocher de la troisième série de points d'ancrage 114, ... 114_6, et plus particulièrement pour amener, introduire et enfoncer la troisième branche 123 dudit second mors 111 dans la troisième rainure 129 appartenant à la première tête 2, et ainsi forcer le glissement de la troisième rampe 127 le long de la troisième contre-rampe 128, tandis que la quatrième rangée de moteurs de verrouillage 112_7, ... 112_12 tirent, de préférence de façon simultanée, sur leur quatrième rangée de tirants 113_7, ... 113_12 pour forcer le second mors 111, guidé par le second dispositif de guidage 150, à se rapprocher de la quatrième série de points d'ancrage 114_7, ... 114_12, et plus particulièrement pour amener, introduire et enfoncer la quatrième branche 124 dudit second mors 111 dans la quatrième rainure 133 appartenant à la seconde tête 102, et ainsi forcer le glissement de la quatrième rampe 131 le long de la quatrième contre-rampe 32.

A titre indicatif, l'effort de traction élémentaire développé par un seul moteur de verrouillage 12 sur son tirant 13 sera de préférence de l'ordre de 80 kN à 250 kN.

Si chaque mors 11, 111 compte douze moteurs de verrouillage 12, ici identiques, cela signifie que l'effort de traction global, orienté selon la direction de verrouillage Y, et qui tend à forcer le rapprochement de chaque mors 11, 111 à l'encontre des têtes 2, 102, est de préférence compris sensiblement entre 1 000 kN et 3 000 kN.

En définitive, l'effort de serrage F10 qui résulte de l'action simultanée des deux mors 11, 111 sur les première et seconde têtes 2, 102 et qui plaque lesdites têtes 2, 102 contre le bloc d'outillage 5 peut ainsi être de préférence compris entre 3 800 kN et 11 500 kN, et par exemple voisin de 8000 kN (soient environ 800 tonnes).

La configuration de fermeture est maintenue aussi longtemps que nécessaire pour la production du profilé souhaité.

Avantageusement, en fonction de l'angle d'inclinaison des rampes 27, 31, 127, 131 et du coefficient de frottement entre rampes et contre-rampe, il est envisageable de pouvoir désactiver le moteurs de verrouillage 12 tout en maintenant passivement l'effort de serrage F10 nécessaire.

Lorsque l'on souhaite procéder à l'ouverture de l'installation 1, on réalise les opérations ci-dessus en ordre inversé, c'est-à-dire que l'on relâche l'effort exercé par les moteurs de verrouillage 12 en désactivant ces derniers, puis l'on manœuvre les mors 11, 11 en retrait selon la direction de verrouillage Y, selon les mouvements de recul BM11, BM111 jusqu'à atteindre la butée de recul 59, afin d'extraire les branches 23, 24, 123, 124 desdits mors 11, 111 hors des rainures 29, 33, 129, 133 des têtes 2, 102 et donc de dégager les rampes 27, 31, 127, 31 des contre-rampes 28, 32, 128, 132.

Pour cela, on sollicite tout d'abord les tirants 13 en compression au moyen des moteurs de verrouillage 12, que l'on active en conséquence dans le sens inverse de l'activation utilisée pour la fermeture, afin que les renflements 13A viennent en appui contre le fond 15B des encoches 15 des têtes 2, 102, et, à la manière d'éjecteurs, repoussent les mors 11, 111 vers l'arrière, amorçant ainsi le mouvement de recul BM11, BM111 desdits mors et de leur platine de verrouillage 56, et extrayant ainsi les rampes 27, 31, 127, 131 des contre-rampes 28, 32, 128, 132.

Une fois les tiges 41, 13A des tirants 13 totalement sorties hors des chemises 42 des moteurs de verrouillage 12, et donc une fois les rampes dégagées des contre-rampes, on peut activer le vérin de recul 60 pour achever le mouvement de recul BM11, BM111 jusqu'à atteindre la butée de recul 59. De la sorte, on décolle les renflements 13B des tirants du fond 15B des encoches, afin de placer lesdits renflements 13B en position intermédiaire, de préférence en position centrale, entre le fond 15B des encoches 15 et le premier épaulement 15A desdites encoches 15 le long de l'axe de verrouillage Y, ce qui permet de ménager, de part et d'autre des renflements 13B selon l'axe de verrouillage Y, entre lesdits renflements 13B et les épaulements 15A, 15B des encoches, un jeu fonctionnel (valant ici de préférence sensiblement J15Y/2 de chaque côté) qui permettra de dégager les têtes 2, 102 sans frotter sur les renflements 13B, et donc sans risquer de voiler les tiges 41, 13A des tirants 13.

On écarte ensuite, ici au moyen des chariots 22, 122, les têtes 2, 102 du bloc d'outillage 5 par des mouvements de recul BM2, BM102 opposés l'un de l'autre, afin de séparer les têtes 2, 102 du bloc d'outillage 5 au niveau des plans de joints P2, P102, et de dégager les encoches 15 des tirants 13.

De préférence, l'activation et les mouvements des différents organes, notamment les mouvements d'avance FM2, FM102 et de recul BM2, BM102 des chariots 22, 122 portant les têtes 2, 102, l'activation des moteurs de verrouillage 12 actionnant les tirants 13, ou bien encore le mouvement de recul BM11, BM111 des platines de verrouillage 56 généré par le vérin de recul 60, seront pilotés par une unité de commande appropriée, telle qu'une unité de commande électronique.

## Revendications

1. Installation (1) d'extrusion comprenant au moins une première tête (2) qui est agencée pour recevoir une première extrudeuse (3) destinée à délivrer un premier matériau extrudé, ladite première tête (2) comprenant au moins une première voie (4) qui permet d'acheminer ledit premier matériau extrudé jusqu'à un bloc d'outillage (5) qui comprend une filière (6) agencée pour conformer ledit au moins premier matériau extrudé en un profilé, ladite installation (1) pouvant adopter alternativement une configuration de fermeture, dans laquelle la première tête (2) est maintenue fixée contre ledit bloc d'outillage (5) par un premier verrou (10) qui exerce à cet effet un effort de serrage (F10) qui presse ladite première tête (2) contre le bloc d'outillage (5) selon une première direction (X) dite « direction d'accouplement » (X), de manière à ce que le bloc d'outillage (5) puisse recevoir le premier matériau extrudé en provenance de la première extrudeuse (3), et une configuration d'ouverture, dans laquelle ladite première tête (2) est séparée dudit bloc d'outillage (5), l'installation (1) étant **caractérisée en ce que** le premier verrou (10) comprend un premier mors (11) qui est monté mobile selon une seconde direction (Y), dite « direction de verrouillage » (Y), transverse à la direction d'accouplement (X), ainsi qu'au moins un moteur de verrouillage (12) qui est embarqué sur ledit premier mors (11) et couplé à un tirant (13) qui est agencé de manière à assurer une prise contre un point d'ancrage (14) prévu à cet effet dans la première tête (2), de sorte que le moteur de verrouillage (12) puisse agir en traction sur le tirant (13), à l'encontre du point d'ancrage (14), afin de se rapprocher, avec ledit premier mors (11), dudit point d'ancrage (14), selon la direction de verrouillage (Y), de manière à ce que ledit premier mors (11) génère l'effort de serrage (F10) qui presse la première tête (2) contre le bloc d'outillage (5).

2. Installation selon la revendication 1 **caractérisée en ce que** le tirant (13) comprend une tige (13A), de préférence rectiligne, qui est actionnée par le moteur de verrouillage (12), qui s'étend selon la direction de verrouillage (Y), de préférence parallèlement à ladite direction de verrouillage (Y), et qui possède un renflement (13B), tel qu'un collet, qui est agencé pour venir en prise dans un logement (15) conjugué, tel qu'une encoche, qui est prévu dans la première tête (2) pour former le point d'ancrage (14).

3. Installation selon la revendication 1 ou 2 **caractérisée en ce que** le moteur de verrouillage (12) est formé par un vérin (40), de préférence un vérin hydraulique ou un vérin à vis, qui comprend une tige (41) mobile formant le tirant (13).

4. Installation selon l'une des revendications précédentes **caractérisée en ce que** le premier mors (11) présente une forme en C, et comprend à cet effet une première branche (23) et une seconde branche (24) qui sont reliées entre elles par une traverse (25) et qui font saillie dans la direction de verrouillage (Y), de sorte à définir entre elles, selon la direction d'accouplement (X), un entrefer de serrage (26), et **en ce que** au moins la première branche (23) présente une première rampe (27) qui est orientée obliquement par rapport à un plan normal à la direction d'accouplement (X), de sorte à pouvoir coopérer avec la première tête (2) pour générer l'effort de serrage (F10) par effet de coin, lorsque le moteur de verrouillage (12) rapproche le premier mors (11) du point d'ancrage (14).

5. Installation selon la revendication 4 **caractérisée en ce que** le tirant (13) s'étend dans l'entrefer de serrage (26).

6. Installation selon l'une des revendications précédentes **caractérisée en ce que** le premier mors (11) du premier verrou (10) embarque une pluralité de moteurs de verrouillage (12, 12_2, 12_3, ... 12_N) distincts, qui sont couplés chacun à un tirant (13, 13_2, 13_3, ... 13_N) propre, de sorte à pouvoir agir en traction à l'encontre d'une pluralité de points d'ancrage (14, 14_2, 14_3, ... 14_N) répartis sur la première tête (2).

7. Installation selon la revendication 6 **caractérisée en ce que** au moins certains moteurs de verrouillage (12, 12_2, ... 12_6) de la pluralité de moteurs de verrouillage (12, 12_2, ... 12_12) sont étagés selon une troisième direction, dite « direction d'étagement » (Z), qui est normale au plan de base (XY) formé par la direction d'accouplement (X) et la direction de verrouillage (Y), et de façon plus préférentielle sont alignés les uns par rapport aux autres parallèlement à ladite direction d'étagement (Z), selon une première rangée (L12).

8. Installation selon la revendication 7 **caractérisée en ce que** le bloc d'outillage (5) comprend une cassette qui contient une pluralité de plaques (5_1, 5_2, ... 5_N) qui sont superposées selon la direction d'accouplement (X) dans le sens de leur épaisseur, de manière à définir entre plaques contiguës un ou plusieurs canaux qui permettent d'acheminer le ou des matériaux extrudés en provenance de la ou d'extrudeuses (3, 103) jusqu'à la filière (6), selon une direction d'écoulement (F5) qui est parallèle à la direction d'étagement (Z), afin que les moteurs de verrouillage (12, 12_2, ... 12_6) et les points d'ancrage correspondants (14, 14_2, ... 14_6) soient répartis le long de ladite direction d'écoulement (F5).

9. Installation selon l'une des revendications précédentes **caractérisée en ce qu'**elle comprend une seconde tête (102) qui est agencée pour recevoir au moins une seconde extrudeuse (103) destinée à délivrer un second matériau extrudé et qui comprend au moins une seconde voie (104) permettant d'acheminer ledit second matériau extrudé jusqu'au bloc d'outillage (5), **en ce que** ledit bloc d'outillage (5) s'étend, le long de la direction d'accouplement (X), depuis une première face de jonction (5U), de préférence normale à ladite direction d'accouplement (X), jusqu'à une seconde face de jonction (105U) opposée, de préférence parallèle à la première face de jonction (5U), de manière à ce que, en configuration de fermeture, la première tête (2) soit maintenue fixée en appui contre la première face de jonction (5U) du bloc d'outillage (5) tandis que la seconde tête (102) est maintenue fixée en appui contre la seconde face de jonction (105U) dudit bloc d'outillage (5), et **en ce que** le premier mors (11) du premier verrou (10) est agencé de manière à venir en prise d'une part contre la première tête (2) et d'autre part contre la seconde tête (102) de sorte à pouvoir forcer un rapprochement mutuel, selon la direction d'accouplement (X), de la première et de la seconde tête (2, 102) situées de part et d'autre du bloc d'outillage (5), et ainsi générer un effort de serrage (F10) qui provoque un pincement du bloc d'outillage (5) entre la première tête (2) et la seconde tête (102).

10. Installation selon la revendication 9 **caractérisée en ce que** le premier mors (11) du premier verrou (10) embarque d'une part une première rangée (L12) de moteurs de verrouillage (12, 12_2, 12_3, 12_4, 12_5, 12_6), alignés selon une direction d'étagement (Z) normale à un plan de base (XY) formé par les directions d'accouplement (X) et de verrouillage (Y), et dont les tirants (13, 13_2, 13_3, 13_4, 13_5, 13_6) respectifs viennent en prise dans une première pluralité de points d'ancrage (14, 14_2, 14_3, 14_4, 14_5, 14_6) ménagés dans la première tête (2), et d'autre part une seconde rangée (L12_2) de moteurs de verrouillage (12_7, 12_8, 12_9, 12_10, 12_11, 12_12), alignés selon la direction d'étagement (Z), parallèlement à la première rangée (L12), et dont les tirants (13_7, 13_8, 13_9, 13_10, 13_11, 13_12) respectifs viennent en prise dans une seconde pluralité de points d'ancrage (14_7, 14_8, 14_9, 14_10, 14_11, 14_12) ménagés dans la seconde tête (102).

11. Installation selon l'une des revendications précédentes **caractérisée en ce que** le premier verrou (10) est porté par un premier dispositif de guidage de verrou (50) comprenant une platine (51) dite « platine de centrage latéral » (51) qui autorise un déplacement guidé du premier mors (11) en translation selon la direction d'accouplement (X) et qui comporte au moins un ressort de rappel (52) qui tend à ramener ledit premier mors (11) vers une position de centrage prédéterminée le long de ladite direction d'accouplement (X).

12. Installation selon l'une des revendications précédentes **caractérisée en ce que** le premier verrou (10) est porté par un premier dispositif de guidage de verrou (50) qui comprend une platine (56) dite « platine de verrouillage » (56) qui guide le déplacement en translation du premier mors (11) selon la direction de verrouillage (Y), pour permettre audit premier mors (11) d'adopter alternativement une position d'engagement, dans laquelle ledit premier mors (11) coopère avec la première tête (2) pour générer l'effort de serrage (F10), et une position de retrait, dans laquelle le premier mors (11) libère la première tête (2) pour autoriser la séparation du bloc d'outillage (5), et **en ce que** ladite platine de verrouillage (56) comprend une butée de recul (59) qui définit une position de retrait prédéterminée selon la direction de verrouillage (Y).

13. Installation selon l'une des revendications précédentes **caractérisée en ce qu'**elle comporte, à l'opposé du premier verrou (10) par rapport au bloc d'outillage (5) selon la direction de verrouillage (Y), un second verrou (110), de préférence symétrique du premier verrou (10), second verrou (10) qui comprend un second mors (111) monté mobile selon ladite direction de verrouillage (Y) ainsi qu'au moins un second moteur de verrouillage (112) qui est embarqué sur ledit second mors (111) et couplé à un second tirant (113) qui est agencé de manière à assurer une prise contre un second point d'ancrage (114) prévu à cet effet dans la première tête (2), de sorte que l'on peut verrouiller la première tête (2) contre le bloc d'outillage (5) en rapprochant l'un de l'autre, selon une même direction de verrouillage (Y) commune mais selon des sens de déplacement (FM11, FM111) opposés, les mors (11, 111) respectifs du premier verrou (10) et du second verrou (110).

## Patentansprüche

1. Extrusionsanlage (1) mit mindestens einem ersten Kopf (2), der so angeordnet ist, dass er einen ersten Extruder (3) zur Abgabe eines ersten extrudierten Materials aufnimmt, wobei der erste Kopf (2) mindestens einen ersten Kanal (4) aufweist, der das erste extrudierte Material zu einem Werkzeugblock (5) führt, der eine Matrize (6) aufweist, die so angeordnet ist, dass sie das mindestens eine erste extrudierte Material zu einem Profil formt, wobei die Anlage (1) alternativ eine geschlossene Konfiguration annehmen kann, in der der erste Kopf (2) gegen den Werkzeugblock (5) durch einen ersten Riegel (10) fixiert gehalten wird, der zu diesem Zweck eine Klemmkraft (F10) ausübt, die den ersten Kopf (2) gegen den Werkzeugblock (5) in einer ersten Richtung (X), genannt "Kopplungsrichtung" (X), drückt, so dass der Werkzeugblock (5) das erste extrudierte Material aufnehmen kann, das aus dem ersten Extruder (3) kommt, und eine Öffnungskonfiguration, in der der erste Kopf (2) von dem Werkzeugblock (5) getrennt ist, wobei die Anlage (1) **dadurch gekennzeichnet ist, dass** der erste Riegel (10) eine erste Backe (11) aufweist, die beweglich in einer zweiten Richtung (Y), genannt "Verriegelungsrichtung" (Y), quer zur Kopplungsrichtung (X) montiert ist, sowie mindestens einen Verriegelungsmotor (12), der an der ersten Backe (11) angebracht und mit einer Zugstange (13) gekoppelt ist, die so angeordnet ist, dass sie einen Eingriff gegen einen zu diesem Zweck im ersten Kopf (2) vorgesehenen Verankerungspunkt (14) gewährleistet, so dass der Verriegelungsmotor (12) auf die Zugstange (13) gegen den Verankerungspunkt (14) unter Zug einwirken kann, um sich mit der ersten Backe (11) dem Verankerungspunkt (14) in der Verriegelungsrichtung (Y) zu nähern, so dass die erste Backe (11) die Klemmkraft (F10) erzeugt, die den ersten Kopf (2) gegen den Werkzeugblock (5) drückt.

2. Anlage nach Anspruch 1, **dadurch gekennzeichnet, dass** die Zugstange (13) eine vorzugsweise gerade Stange (13A) aufweist, die durch den Verriegelungsmotor (12) betätigt wird und sich entlang der Verriegelungsrichtung (Y) erstreckt, vorzugsweise parallel zu der Verriegelungsrichtung (Y), und die eine Ausbuchtung (13B), wie z. B. einen Kragen, aufweist, die so angeordnet ist, dass sie in eine passende Aufnahme (15), wie z. B. eine Kerbe, eingreift, die in dem ersten Kopf (2) vorgesehen ist, um den Verankerungspunkt (14) zu bilden.

3. Anlage nach Anspruch 1 oder 2, **dadurch gekennzeichnet, dass** der Verriegelungsmotor (12) durch einen Zylinder (40), vorzugsweise einen Hydraulikzylinder oder einen Spindelzylinder, gebildet wird, der eine bewegliche Stange (41) aufweist, die die Zugstange (13) bildet.

4. Anlage nach einem der vorhergehenden Ansprüche, **dadurch gekennzeichnet, dass** die erste Backe (11) eine C-Form aufweist und zu diesem Zweck einen ersten Schenkel (23) und einen zweiten Schenkel (24) aufweist, die durch einen Steg (25) miteinander verbunden sind und in der Verriegelungsrichtung (Y) vorstehen, so dass zwischen ihnen in der Kopplungsrichtung (X) ein Klemmspalt (26) definiert wird, und dass mindestens der erste Schenkel (23) eine erste Rampe (27) aufweist, die schräg zu einer Ebene senkrecht zur Kopplungsrichtung (X) ausgerichtet ist, so dass sie mit dem ersten Kopf (2) zusammenwirken kann, um die Klemmkraft (F10) durch Keilwirkung zu erzeugen, wenn der Verriegelungsmotor (12) die erste Backe (11) an den Verankerungspunkt (14) heranführt.

5. Anlage nach Anspruch 4, **dadurch gekennzeichnet, dass** sich die Zugstange (13) in den Klemmspalt (26) erstreckt.

6. Anlage nach einem der vorhergehenden Ansprüche, **dadurch gekennzeichnet, dass** die erste Backe (11) des ersten Riegels (10) eine Vielzahl von verschiedenen Verriegelungsmotoren (12, 12_2, 12_3, ... 12_N) aufweist, die jeweils mit einer eigenen Zugstange (13, 13_2, 13_3, ... 13_N) gekoppelt sind, so dass sie auf Zug gegen eine Vielzahl von Verankerungspunkten (14, 14_2, 14_3, ... 14_N) wirken können, die über den ersten Kopf (2) verteilt sind.

7. Anlage nach Anspruch 6, **dadurch gekennzeichnet, dass** mindestens einige der Verriegelungsmotoren (12, 12_2, ... 12_6) der Vielzahl von Verriegelungsmotoren (12, 12_2, ... 12_12) in einer dritten Richtung, genannt "Abstufungsrichtung" (Z), die senkrecht zu der durch die Kopplungsrichtung (X) und die Verriegelungsrichtung (Y) gebildeten Basisebene (XY) verläuft, abgestuft sind und besonders bevorzugt parallel zu der Abstufungsrichtung (Z) in einer ersten Reihe (L12) relativ zueinander ausgerichtet sind.

8. Anlage nach Anspruch 7, **dadurch gekennzeichnet, dass** der Werkzeugblock (5) eine Kassette aufweist, die eine Vielzahl von Platten (5_1, 5_2, ... 5_N) enthält, die entlang der Kopplungsrichtung (X) in Richtung ihrer Dicke übereinander angeordnet sind, um zwischen benachbarten Platten einen oder mehrere Kanäle zu definieren, die es ermöglichen, das oder die extrudierten Materialien von dem oder den Extrudern (3, 103) zu der Matrize (6) entlang einer Fließrichtung (F5) zu leiten, die parallel zu der Abstufungsrichtung (Z) ist, so dass die Verriegelungsmotoren (12, 12_2, ... 12_6) und die entsprechenden Verankerungspunkte (14, 14_2, ... 14_6) entlang der Fließrichtung (F5) verteilt sind.

9. Anlage nach einem der vorhergehenden Ansprüche, **dadurch gekennzeichnet, dass** sie einen zweiten Kopf (102) aufweist, der so angeordnet ist, dass er mindestens einen zweiten Extruder (103) zur Abgabe eines zweiten extrudierten Materials aufnimmt, und der mindestens einen zweiten Kanal (104) zum Zuführen des zweiten extrudierten Materials zum Werkzeugblock (5) aufweist, dass sich der Werkzeugblock (5) entlang der Kopplungsrichtung (X) von einer ersten Verbindungsfläche (5U), vorzugsweise senkrecht zu der Kopplungsrichtung (X), bis zu einer gegenüberliegenden zweiten Verbindungsfläche (105U), vorzugsweise parallel zu der ersten Verbindungsfläche (5U), erstreckt, so dass in der geschlossenen Konfiguration der erste Kopf (2) in Anlage gegen die erste Verbindungsfläche (5U) des Werkzeugblocks (5) fixiert gehalten wird, während der zweite Kopf (102) in Anlage gegen die zweite Verbindungsfläche (105U) des Werkzeugblocks (5) fixiert gehalten wird, und dass die erste Backe (11) des ersten Riegels (10) so angeordnet ist, dass sie einerseits gegen den ersten Kopf (2) und andererseits gegen den zweiten Kopf (102) in Eingriff kommt, so dass sie eine gegenseitige Annäherung des ersten und des zweiten Kopfes (2, 102) gemäß der Kopplungsrichtung (X) erzwingen kann, die sich auf beiden Seiten des Werkzeugblocks (5) befinden, und um somit eine Klemmkraft (F10) zu erzeugen, die ein Einklemmen des Werkzeugblocks (5) zwischen dem ersten Kopf (2) und dem zweiten Kopf (102) bewirkt.

10. Anlage nach Anspruch 9, **dadurch gekennzeichnet, dass** die erste Backe (11) des ersten Riegels (10) einerseits eine erste Reihe (L12) von Verriegelungsmotoren (12, 12_2, 12_3, 12_4, 12_5, 12_6) aufweist, die in einer Abstufungsrichtung (Z) senkrecht zu einer Basisebene (XY) ausgerichtet sind, die durch die Kopplungsrichtung (X) und die Verriegelungsrichtung (Y) gebildet wird, und deren jeweilige Zugstangen (13, 13_2, 13_3, 13_4, 13_5, 13_6) in eine erste Vielzahl von Verankerungspunkten (14, 14_2, 14_3, 14_4, 14_5, 14_6) eingreifen, die im ersten Kopf (2) ausgebildet sind, und andererseits eine zweite Reihe (L12_2) von Verriegelungsmotoren (12_7, 12_8, 12_9, 12_10, 12_11, 12_12), die entlang der Abstufungsrichtung (Z) parallel zur ersten Reihe (L12) ausgerichtet sind, und deren jeweilige Zugstangen (13_7, 13_8, 13_9, 13_10, 13_11, 13_12) in eine zweite Vielzahl von Verankerungspunkten (14_7, 14_8, 14_9, 14_10, 14_11, 14_12) eingreifen, die im zweiten Kopf (102) ausgebildet sind.

11. Anlage nach einem der vorhergehenden Ansprüche, **dadurch gekennzeichnet, dass** der erste Riegel (10) von einer ersten Riegelführungsvorrichtung (50) getragen wird, die eine Platine (51), genannt "Seitenzentrierungsplatine" (51), aufweist, die eine geführte Verschiebung der ersten Backe (11) in Translation entlang der Kopplungsrichtung (X) zulässt und die mindestens eine Rückstellfeder (52) aufweist, die anstrebt, die erste Backe (11) in eine vorbestimmte Zentrierposition entlang der Kopplungsrichtung (X) zurückzuführen.

12. Anlage nach einem der vorhergehenden Ansprüche, **dadurch gekennzeichnet, dass** der erste Riegel (10) von einer ersten Riegelführungsvorrichtung (50) getragen wird, die eine Platine (56), genannt "Verriegelungsplatine" (56), aufweist, die die Translationsbewegung der ersten Backe (11) in der Verriegelungsrichtung (Y) führt, damit die erste Backe (11) abwechselnd eine Eingriffsposition einnehmen kann, in der die erste Backe (11) mit dem ersten Kopf (2) zusammenwirkt, um die Klemmkraft (F10) zu erzeugen, und andererseits eine Rückzugsposition, in der die erste Backe (11) den ersten Kopf (2) freigibt, um die Trennung des Werkzeugblocks (5) zu ermöglichen, und dass die Verriegelungsplatine (56) einen Rückzugsanschlag (59) aufweist, der eine vorbestimmte Rückzugsposition entlang der Verriegelungsrichtung (Y) definiert.

13. Anlage nach einem der vorhergehenden Ansprüche, **dadurch gekennzeichnet, dass** sie auf der gegenüberliegenden Seite des ersten Riegels (10) in Bezug auf den Werkzeugblock (5) gemäß der Verriegelungsrichtung (Y) einen zweiten Riegel (110) aufweist, der vorzugsweise symmetrisch zum ersten Riegel (10) ist, wobei der zweite Riegel (10) eine zweite Backe (111) aufweist, die beweglich in der Verriegelungsrichtung (Y) montiert ist, sowie mindestens einen zweiten Verriegelungsmotor (112), der an der zweiten Backe (111) angebracht und mit einer zweiten Zugstange (113) gekoppelt ist, die so angeordnet ist, dass sie einen Eingriff gegen einen zweiten Verankerungspunkt (114) gewährleistet, der zu diesem Zweck in dem ersten Kopf (2) vorgesehen ist, so dass man den ersten Kopf (2) gegen den Werkzeugblock (5) verriegeln kann, indem man die jeweiligen Backen (11, 111) des ersten Riegels (10) und des zweiten Riegels (110) gemäß einer gleichen gemeinsamen Verriegelungsrichtung (Y), aber gemäß entgegengesetzten Verschiebungsrichtungen (FM11, FM111) einander annähert.

## Claims

1. Extrusion installation (1) comprising at least one first head (2) that is arranged to receive a first extruder (3) intended to deliver a first extruded material, said first head (2) comprising at least one first channel (4) that allows said first extruded material to be conveyed to a tooling block (5) that comprises a die (6) arranged to shape said at least first extruded material into a profile, said installation (1) being able to alternately assume a closed configuration, in which the first head (2) is fixedly held against said tooling block (5) by a first lock (10), which to this end exerts a clamping force (F10) that presses said first head (2) against the tooling block (5) in a first direction (X), called "coupling direction" (X), so that the tooling block (5) can receive the first extruded material originating from the first extruder (3), and an open configuration, in which said first head (2) is separated from said tooling block (5), the installation (1) being **characterized in that** the first lock (10) comprises a first jaw (11) that is mounted so as to move in a second direction (Y), called "locking direction" (Y), transverse to the coupling direction (X), as well as at least one locking motor (12) that is mounted on said first jaw (11) and coupled to a tie rod (13) that is arranged so as to engage against an anchor point (14) provided to this end in the first head (2), so that the locking motor (12) can act by pulling on the tie rod (13), against the anchor point (14), in order to approach, with said first jaw (11), said anchor point (14), in the locking direction (Y), so that said first jaw (11) generates the clamping force (F10) that presses the first head (2) against the tooling block (5).

2. Installation according to Claim 1, **characterized in that** the tie rod (13) comprises a rod (13A), preferably a straight rod (13A), which is actuated by the locking motor (12) and which extends in the locking direction (Y), preferably parallel to said locking direction (Y), and which has a boss (13B), such as a flange, that is arranged to engage in a mating recess (15), such as a notch, which is provided in the first head (2) in order to form the anchor point (14).

3. Installation according to Claim 1 or 2, **characterized in that** the locking motor (12) is formed by a cylinder (40), preferably a hydraulic cylinder or a screw cylinder, which comprises a movable rod (41) forming the tie rod (13).

4. Installation according to any of the preceding claims, **characterized in that** the first jaw (11) is C-shaped, and to this end comprises a first leg (23) and a second leg (24), which are connected to each other by a crossmember (25) and which project in the locking direction (Y), so as to together define, in the coupling direction (X), a clamping gap (26), and **in that** at least the first leg (23) has a first ramp (27) that is oriented obliquely in relation to a plane normal to the coupling direction (X), so as to be able to cooperate with the first head (2) in order to generate the clamping force (F10) by means of a wedge effect, when the locking motor (12) brings the first jaw (11) closer to the anchor point (14).

5. Installation according to Claim 4, **characterized in that** the tie rod (13) extends in the clamping gap (26).

6. Installation according to any of the preceding claims, **characterized in that** the first jaw (11) of the first lock (10) supports a plurality of separate locking motors (12, 12_2, 12_3, ... 12_N), each of which is coupled to its specific tie rod (13, 13_2, 13_3, ... 13_N), so as to be able to act by pulling against a plurality of anchor points (14, 14_2, 14_3, ... 14_N) distributed over the first head (2).

7. Installation according to Claim 6, **characterized in that** at least some of the locking motors (12, 12_2, ... 12_6) of the plurality of locking motors (12, 12_2, ... 12_12) are stacked in a third direction, called "stacking direction" (Z), that is normal to the base plane (XY) formed by the coupling direction (X) and the locking direction (Y), and more preferably are aligned in relation to each other parallel to said stacking direction (Z), in a first row (L12).

8. Installation according to Claim 7, **characterized in that** the tooling block (5) comprises a cassette that contains a plurality of plates (5_1, 5_2, ... 5_N) that are superimposed in the coupling direction (X) in the direction of their thickness, so as to define, between contiguous plates, one or more channels that allow the extruded material(s) originating from the extruder(s) (3, 103) to be conveyed to the die (6), in a flow direction (F5) that is parallel to the stacking direction (Z), so that the locking motors (12, 12_2, ... 12_6) and the corresponding anchor points (14, 14_2, ... 14_6) are distributed along said flow direction (F5).

9. Installation according to any of the preceding claims, **characterized in that** it comprises a second head (102) that is arranged to receive at least one second extruder (103) intended to deliver a second extruded material and that comprises at least one second channel (104) allowing said second extruded material to be conveyed to the tooling block (5), **in that** said tooling block (5) extends, in the coupling direction (X), from a first junction face (5U), preferably normal to said coupling direction (X), to an opposite second junction face (105U), preferably parallel to the first junction face (5U), so that, in the closed configuration, the first head (2) is fixedly held in abutment against the first junction face (5U) of the tooling block (5), while the second head (102) is fixedly held in abutment against the second junction face (105U) of said tooling block (5), and **in that** the first jaw (11) of the first lock (10) is arranged so as to engage, on the one hand, against the first head (2) and, on the other hand, against the second head (102), so as to be able to force the mutual bringing together, in the coupling direction (X), of the first and second heads (2, 102) located on either side of the tooling block (5), and thus generate a clamping force (F10) that causes the tooling block (5) to be clamped between the first head (2) and the second head (102).

10. Installation according to Claim 9, **characterized in that** the first jaw (11) of the first lock (10) supports, on the one hand, a first row (L12) of locking motors (12, 12_2, 12_3, 12_4, 12_5, 12_6), aligned in a stacking direction (Z) normal to a base plane (XY) formed by the coupling (X) and locking (Y) directions, and the respective tie rods (13, 13_2, 13_3, 13_4, 13_5, 13_6) of which engage in a first plurality of anchor points (14, 14_2, 14_3, 14_4, 14_5, 14_6)provided in the first head (2), and, on the other hand, a second row (L12_2) of locking motors (12_7, 12_8, 12_9, 12_10, 12_11, 12_12), aligned in the stacking direction (Z), parallel to the first row (L12), and the respective tie rods (13_7, 13_8, 13_9, 13_10, 13_11, 13_12) of which engage in a second plurality of anchor points (14_7, 14_8, 14_9, 14_10, 14_11, 14_12) provided in the second head (102).

11. Installation according to any of the preceding claims, **characterized in that** the first lock (10) is supported by a first lock guidance device (50) comprising a plate (51), called "lateral centring plate" (51), which allows guided translation movement of the first jaw (11) in the coupling direction (X) and which comprises at least one return spring (52) that tends to return said first jaw (11) to a predetermined centring position in said coupling direction (X).

12. Installation according to any of the preceding claims, **characterized in that** the first lock (10) is supported by a first lock guidance device (50) that comprises a plate (56), called "locking plate" (56), which guides the translation movement of the first jaw (11) in the locking direction (Y), in order to allow said first jaw (11) to alternately assume an engagement position, in which said first jaw (11) cooperates with the first head (2) in order to generate the clamping force (F10), and a retracted position, in which the first jaw (11) releases the first head (2) in order to allow the tooling block (5) to be separated, and **in that** said locking plate (56) comprises a return stroke stop (59) that defines a predetermined retracted position in the locking direction (Y).

13. Installation according to any of the preceding claims, **characterized in that** it comprises, opposite the first lock (10) in relation to the tooling block (5) in the locking direction (Y), a second lock (110), preferably symmetrical to the first lock (10), which second lock (10) comprises a second jaw (111) that is mounted so as to move in said locking direction (Y), as well as at least one second locking motor (112), which is mounted on said second jaw (111) and is coupled to a second tie rod (113) that is arranged so as to engage against a second anchor point (114) provided to this end in the first head (2), so that the first head (2) can be locked against the tooling block (5) by bringing together the respective jaws (11, 111) of the first lock (10) and of the second lock (110) in the same common locking direction (Y) but in opposite directions of movement (FM11, FM111).
